# EUROPEAN PATENT SPECIFICATION

(11) **EP 3 994 954 B1**
(45) Date of publication and mention of the grant of the patent: **03.01.2024**
(21) Application number: 20744178.3
(22) Date of filing: 15.06.2020
(51) Int. Cl.: H04W 76/18

(54) **EARLY RADIO LINK ISSUE INDICATION**
ANZEIGE DER AUSGABE EINER FRÜHEN FUNKVERBINDUNG
INDICATION DE PROBLÈME PRÉCOCE DE LIAISON RADIO

(30) Priority: 05.07.2019 US 201962870833 P
(43) Date of publication of application: 11.05.2022
(73) Proprietor: TELEFONAKTIEBOLAGET LM ERICSSON (PUBL), 164 83 Stockholm (SE)
(72) Inventor: WAGER, Stefan, 02360 ESPOO (FI); ORSINO, Antonino, 02430 MASALA (FI)
(74) Representative: Ericsson
(86) International application number: PCT/SE2020/050622
(87) International publication number: WO 2021/006791

(56) References cited:
- WO-A1-2018/212523
- AU-A1- 2014 307 257
- KYOCERA: "Enhanced RLM reporting", 3GPP DRAFT; R2-1705806, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Hangzhou, China; 20170515 - 20170519 12 May 2017 (2017-05-12), XP051285681, Retrieved from the Internet: URL:http://www.3gpp.org/ftp/tsg_ran/WG2_RL 2/TSGR2_98/Docs/ [retrieved on 2017-05-12]
- ERICSSON: "Introduction of enhanced RLM reporting", 3GPP DRAFT; 36331_CR2845_(REL-14)_R2-1705027 INTRODUCTION OF ENHANCED RLM REPORTING, 3RD GENERATION PARTNERSHIP PROJECT (3GPP), MOBILE COMPETENCE CENTRE ; 650, ROUTE DES LUCIOLES ; F-06921 SOPHIA-ANTI , vol. RAN WG2, no. Hangzhou, China; 20170515 - 20170519 6 May 2017 (2017-05-06), XP051264213, Retrieved from the Internet: URL:http://www.3gpp.org/ftp/tsg_ran/WG2_RL 2/TSGR2_98/Docs/ [retrieved on 2017-05-06]

## Description

### Technical Field

Embodiments of the present disclosure relate to methods and apparatus in networks, and particularly methods and wireless devices for radio link status indication.

### Background

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

### Carrier Aggregation

Typically, when Carrier Aggregation (CA) is configured, a User Equipment (UE) only has one Radio Resource Control (RRC) connection with a network. Further, at RRC connection establishment/re-establishment/handover, one serving cell typically provides the Non-Access Stratum (NAS) mobility information, and at RRC connection re-establishment/handover, one serving cell typically provides the security input. This cell is referred to as the Primary Cell (PCell). In addition, depending on UE capabilities, Secondary Cells (SCells) can be configured to form, together with the PCell, a set of serving cells. The configured set of serving cells for a UE using CA therefore consists of one PCell and one or more SCells. Further, when dual connectivity is configured, it could be the case that one carrier under the SCG is used as the Primary SCell (PSCell). Hence, in this case we have one PCell and one or more SCell(s) over the Master Cell Group (MCG) and one PSCell and one or more SCell(s) over the Secondary Cell Group (SCG).

The reconfiguration, addition and removal of SCells can be performed by RRC. At intra-Radio Access Technology (intra-RAT) handover, RRC can also add, remove, or reconfigure SCells for usage with the target PCell. When adding a new SCell, dedicated RRC signalling is generally used for sending all required system information of the SCell i.e. while in connected mode, UEs need not acquire broadcasted system information directly from the SCells.

### Bandwidth Adaptation

To enable Bandwidth Adaptation (BA) on the PCell, the New Radio base station (gNB) typically configures the UE with Uplink and Downlink (UL and DL) Bandwidth Parts (BWP(s)). To enable BA on SCells in case of CA, the gNB typically configures the UE with DL BWP(s) at least (i.e. there may be none in the UL). For the PCell, the initial BWP is the BWP used for initial access. For the SCell(s), the initial BWP is the BWP configured for the UE to first operate at SCell activation. In paired spectrum, DL and UL can switch BWP independently. In unpaired spectrum, DL and UL switch BWP simultaneously. Switching between configured BWPs happens by means of RRC signalling, Downlink Control Information (DCI), inactivity timer or upon initiation of random access. When an inactivity timer is configured for a serving cell, the expiry of the inactivity timer associated to that cell switches the active BWP to a default BWP configured by the network. There can be at most one active BWP per cell, except when the serving cell is configured with Supplementary Uplink (SUL), in which case there can be at most one on each UL carrier.

### Activation/Deactivation Mechanism

To control UE battery consumption when CA is configured, an activation/deactivation mechanism of Cells may be supported. When a SCell is deactivated, the UE does not need to receive the corresponding Physical Downlink Control Channel (PDCCH) or Physical Downlink Shared Channel (PDSCH), cannot transmit in the corresponding uplink, nor is it required to perform Channel Quality Indicator (CQI) measurements. Conversely, when an SCell is active, the UE shall receive PDSCH and PDCCH (if the UE is configured to monitor PDCCH from this SCell) and is expected to be able to perform CQI measurements. Next Generation Radio Access Networks (NG-RAN) ensure that while PUCCH SCell (a Secondary Cell configured with Physical Uplink Control Channel, PUCCH) is deactivated, SCells of secondary PUCCH group (a group of SCells whose PUCCH signalling is associated with the PUCCH on the PUCCH SCell) should not be activated. NG-RAN ensures that SCells mapped to PUCCH SCell are deactivated before the PUCCH SCell is changed or removed.

In NG-Ran, when reconfiguring a set of serving cells:
- SCells added to the set are initially deactivated;
- SCells which remain in the set (either unchanged or reconfigured) do not change their activation status (activated or deactivated).

In NG-Ran, at handover:
- SCells are deactivated.

To enable reasonable UE battery consumption when BA is configured, only one UL BWP for each uplink carrier and one DL BWP or only one DL/UL BWP pair can be active at a time in an active serving cell, all other BWPs that the UE is configured with being deactivated. On deactivated BWPs, the UE does not monitor the PDCCH, does not transmit on PUCCH, Physical Random Access Channel (PRACH) and Uplink Synchronisation Channel (UL-SCH).

### Radio Link Failure due to physical layer problems

It may occur that a UE loses coverage to the cell that the UE is currently connected to. This could occur for a variety of reasons, for example: in a situation when a UE enters a fading dip; or that a handover between cells was needed, but the handover failed for one or another reason. This is particularly true if the "handover region" is very short.

The quality of the radio link is typically monitored in the UE e.g. on the physical layer. The monitoring of the radio link quality is discussed in greater detail in various 3^{rd} Generation Partnership Project (3GPP) Technical Standard (TS) documents, such as 3GPP TS 38.300 V15.6.0, TS 38.331 V 15.6.0 and TS 38.133 V 15.5.0, all of which are available at https://portal.3gpp.org/ as of 7 May 2020.

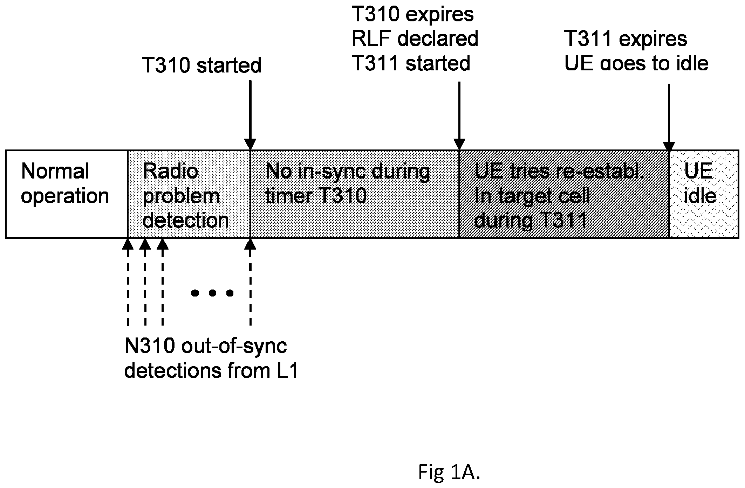

Upon detection that the physical layer experiences problems, for example, according to criteria defined in TS 38.133 V.15.5.0, the physical layer may send an indication to the RRC protocol of the detected problems. The indicator that the wireless device has not correctly synchronized with the network using the radio link may be referred to as an out-of-sync indication. After a configurable number (N310) of such consecutive indications, a timer (T310) is started. Further indicators may subsequently be received indicating that the quality of the link has improved; these indicators may be referred to as in-sync indicators. If the link quality is not improved (recovered) while T310 is running (i.e. there are no or less than the configurable number N311 of consecutive "in-sync" indications from the physical layer), a radio link failure (RLF) is declared in the UE, as illustrated in Figure 1A.

The timers and counters described above are shown in Table 1. The UE may obtain the timer and counter values in any suitably way. As an example of this, the UE may read the timer-values from system information broadcasted in the cell. Alternatively, it is possible to configure the UE with UE-specific values of the timers and constants using dedicated signaling, i.e. where specific values are given to specific UEs with messages directed only to each specific UE.

**Table 1. Timers and Counters**

| **Timer** | **Start** | | **Stop** | **At expiry** |
|---|---|---|---|---|
| T310 | Upon detecting physical layer problems for the SpCell i.e. upon receiving N310 consecutive out-of-sync indications from lower layers. | | Upon receiving N311 consecutive in-sync indications from lower layers for the SpCell, upon receiving RRCReconfiguration with *reconfigurationWithSync* for that cell group, and upon initiating the connection re-establishment procedure. | If the T310 is kept in MCG: If AS security is not activated: go to RRC_IDLE else: initiate the connection re-establishment procedure. |
| | | | | If the T310 is kept in SCG, Inform E-UTRAN/NR about the SCG radio link failure by initiating the SCG failure information procedure as specified in 5.7.3. |
| | | | Upon SCG release, if the T310 is kept in SCG. | |
| T311 | Upon initiating the RRC connection re-establishment procedure | | Upon selection of a suitable NR cell or a cell using another RAT. | Enter RRC_IDLE |
| | | | | |

| **Constant** | | **Usage** | | |
|---|---|---|---|---|
| N310 | | Maximum number of consecutive "out-of-sync" indications for the SpCell received from lower layers | | |
| N311 | | Maximum number of consecutive "in-sync" indications for the SpCell received from lower layers | | |

As explained in TS 38.331 V.15.6.0, there are default values for N310 and N311 which are used unless the network signals explicit values; the default value is 1 for both. The value ranges for the timer and constants that may be used are shown in below, in an extract from TS 38.331 V.15.6.0 (the relevant values, as shown in Table 1, are n310, n311, t310 and t311) All time values are given in milliseconds (ms). The constant values are given as integers, so the potential values listed for n310 are 1, 2, 3, 4, 6, 8, 10 and 20.

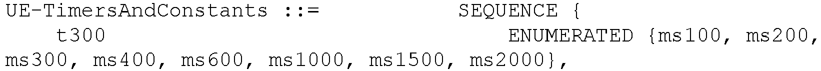

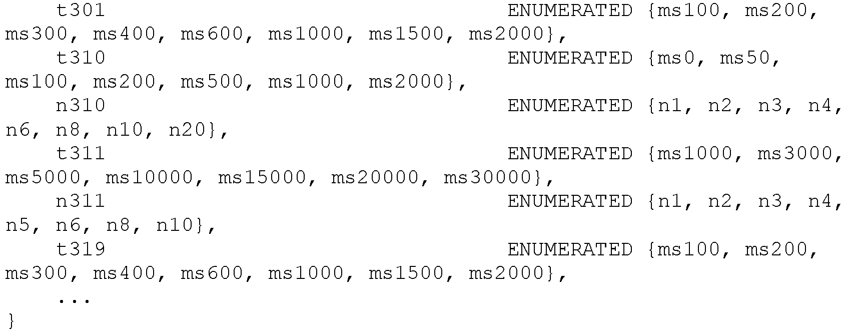

In the event that T310 expires for the MCG, the may UE initiate a connection re-establishment to recover the ongoing RRC connection, as shown in Figure 1A. This procedure now includes cell selection by the UE. i.e. the RRC_CONNECTED UE tries to autonomously find a better cell to connect to, since the connection to the previous cell failed according to the described measurements. It is possible that the UE ultimately returns to the first cell anyway following the cell search. Once a suitable cell is selected (as further described e.g. in TS 38.304 V 15.4.0, also available at at https://portal.3gpp.org/ as of 7 May 2020), the UE requests re-establishment of the connection in the selected cell. An RLF results in UE based cell selection, in contrast to the normally applied network-controlled mobility.

If the re-establishment is successful (which depends, among other things, if the selected cell and the gNB controlling that cell are prepared to maintain a connection to the UE), then the connection between the UE and the gNB can resume.

A failure of a re-establishment means that the UE enters an RRC_ IDLE state and the connection is released. To continue communication, a brand new RRC connection has then to be requested and established.

The timers T310 and T311 and counters N310 and N311 described above and shown in table 1 provide freedom and hysteresis for configuring the criteria for when a radio link should be considered as failed (and recovered). It is desirable for freedom and hysteresis to be provided in this way, as it would hurt the end-user performance if a connection is abandoned prematurely if it turned out that the loss of link quality was temporary, and the UE succeeded in recovering the connection without any further actions or procedures (e.g. before T310 expires, or before the counting reaches value N310).

An extract from TS 38.331 V 15.6.0, section 5.3.10 illustrating NR radio link failure detection related actions is shown below:

### 5.3.10 Radio link failure related actions

### 5.3.10.1 Detection of physical layer problems in RRC_CONNECTED

The UE shall:
1> upon receiving N310 consecutive "out-of-sync" indications for the SpCell from lower layers while neither T300, T301, T304, T319 not T311 is running:
   2> start timer T310 for the corresponding SpCell.

### 5.3.10.2 Recovery of physical layer problems

Upon receiving N311 consecutive "in-sync" indications for the SpCell from lower layers while T310 is running, the UE shall:
1> stop timer T310 for the corresponding SpCell.

NOTE 1: In this case, the UE maintains the RRC connection without explicit signalling, i.e. the UE maintains the entire radio resource configuration.
NOTE 2: Periods in time where neither "in-sync" nor "out-of-sync" is reported by layer 1 do not affect the evaluation of the number of consecutive "in-sync" or "out-of-sync" indications.

### 5.3.10.3 Detection of radio link failure

The UE shall:
1> upon T310 expiry in PCell; or
1> upon random access problem indication from MCG MAC while neither T300, T301, T304 nor T311 is running; or
1> upon indication from MCG RLC that the maximum number of retransmissions has been reached:
   2> if CA duplication is configured and activated; and for the corresponding logical channel *allowedServingCells* only includes SCell(s):
      3> initiate the failure information procedure as specified in 5.7.x to report RLC failure.
   2> else:
      3> consider radio link failure to be detected for the MCG i.e. RLF;
      3> if AS security has not been activated:
         4> perform the actions upon going to RRC_IDLE as specified in 5.3.11, with release cause 'other';
      3> else:
         4> initiate the connection re-establishment procedure as specified in 5.3.7.

The UE shall:
1> upon T310 expiry in PSCell; or
1> upon random access problem indication from SCG MAC; or
1> upon indication from SCG RLC that the maximum number of retransmissions has been reached:
   2> if CA duplication is configured and activated; and for the corresponding logical channel *allowedServingCells* only includes SCell(s):
      3> initiate the failure information procedure as specified in 5.7.x to report RLC failure.
   2> else:
      3> consider radio link failure to be detected for the SCG i.e. SCG-RLF;
   2> initiate the SCG failure information procedure as specified in 5.7.3 to report SCG radio link failure.

### 5.7.5 Failure information

### 5.7.5.1 General

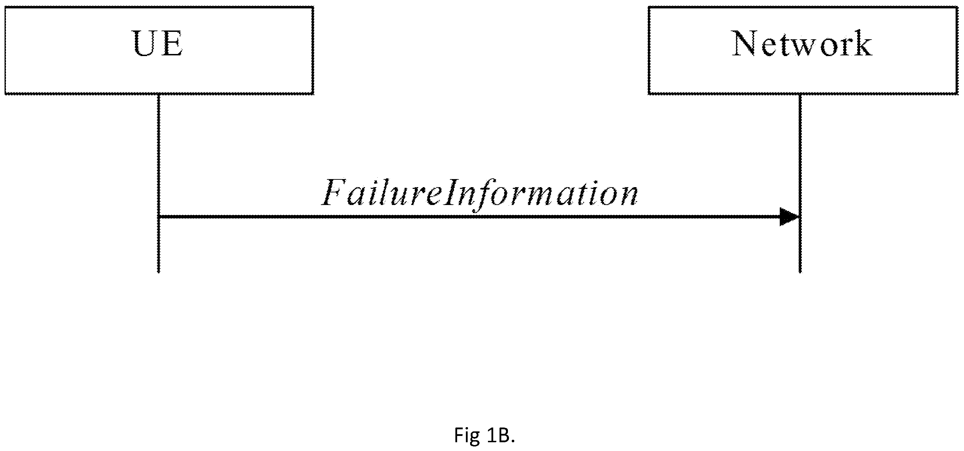

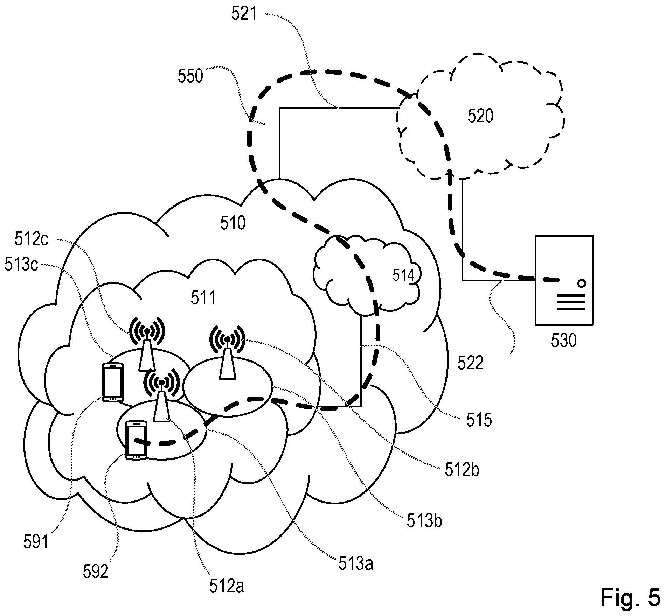

Figure 1B shows Figure 5.7.5.1-1 from TS 38.331 V 15.6.0, section 5.3.10, and illustrates the procedure for informing the network of radio link failure.

The purpose of this procedure is to inform the network about a failure detected by the UE.

### 5.7.5.2 Initiation

A UE initiates the procedure when there is a need inform the network about a failure detected by the UE. In particular, the UE initiates the procedure when the following condition is met:
1> upon detecting failure for an RLC bearer, in accordance with 5.3.10;

Upon initiating the procedure, the UE shall:
1> initiate transmission of the *FailureInformation* message as specified in 5.7.5.3;

### 5.7.5.3 Actions related to transmission of FailureInformation message

The UE shall:
1> if initiated to provide RLC failure information:
   2> set *logicalChannelIdentity* to the logical channel identity of the failing RLC bearer;
   2> set *cellGroupIndication* to the cell group of the failing RLC bearer;
   2> set *failureType* to the type of failure that was detected;
1> if used to inform the network about a failure for an MCG RLC bearer:
   2> submit the *FailureInformation* message to lower layers for transmission via SRB 1;
1> else if used to inform the network about a failure for an SCG RLC bearer: and if the UE is configured with EN-DC:
   2> if SRB3 is configured:
      3> submit the *FailureInformation* message to lower layers for transmission via SRB3;
   2> else:
      3> submit the *FailureInformation* message via the EUTRA MCG embedded in E-UTRA RRC message *ULInformationTransferMRDC* as specified in TS 36.331 [10]

### - FailureInformation

The FailureInformation message is used to inform the network about a failure detected by the UE.
Signalling radio bearer: SRB1 or SRB3
RLC-SAP: AM
Logical channel: DCCH
Direction: UE to network

### FailureInformation message

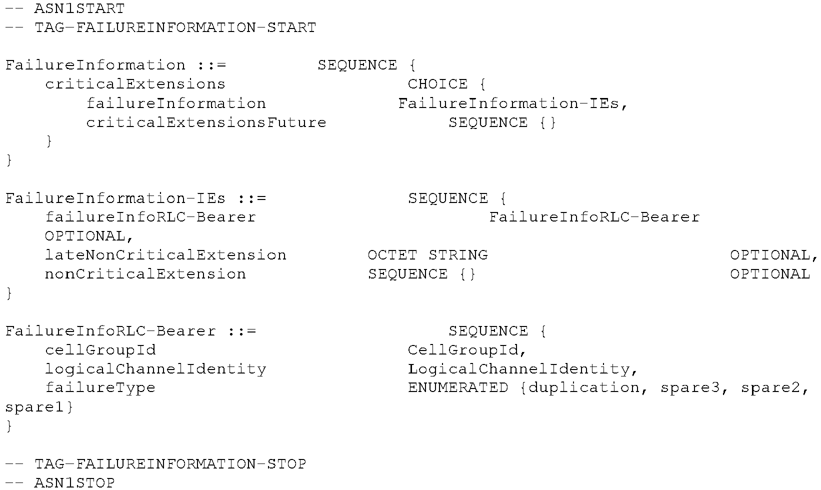

There currently exist certain challenges. Current physical layer problem handling is mainly handled locally in the UE. It is possible for the network to configure the UE behaviour to certain extent by setting suitable values for N310 and T310, however there is no way for the network to monitor an ongoing radio link issue, such as a physical layer problem, in the UE until T310 expires and the UE will declare Radio Link Failure (RLF), perform cell selection and RRC re-establishment.

As declaring RLF, performing cell selection and RRC re-establishment cause a significant outage time for the UE, during which communication with the network may not be possible, T310 is typically set to a comparatively long value (for example; 1-2 seconds) to avoid premature detection of RLF. As a result, for the cases where the UE is not able to recover the connection by itself, recovery by means of RRC re-establishment will cause a long interruption in connectivity. In the event that smaller values are set for N310 and T310, this results in a decrease in network control of mobility control, as the UE then sooner triggers the cell selection and RRC connection re-establishment procedure; this procedure is out of the control of the network.

Another challenge is that in cases where a RRC re-establishment procedure is needed, one of the more time-consuming procedures that the UE needs to perform is the cell (re)selection process. During the cell (re)selection process the UE attempts to find a suitable cell. If the cell selection process fails to find a suitable cell after a complete scan of all RATs and all frequency bands supported by the UE, the UE shall attempt to find an acceptable cell of any Public Land Mobile Network (PLMN) to camp on, trying all RATs that are supported by the UE and searching first for a high-quality cell. Further, when no suitable cells are found, the UE enters or remains in an RRC_IDLE state. After a certain "backoff" period, the UE will then typically re-perform the cell (re)selection process thus consuming more battery.

In situations where the UE is configured to be capable of using carrier aggregation it is possible that, even when RLF is detected on the PCell, one or more of the configured SCells are still able to communicate with the network. Such communication requires though that the SCell is configured with PUCCH/PDCCH resources for scheduling request/assignment and HARQ signalling.
[1] TS 38.300 v15.6.0, available at https://portal.3gpp.org/ as of 7 May 2020, provides an overview and overall description of the NG-RAN and focuses on the radio interface protocol architecture of NR connected to 5GC.
[2] TS 38.331 v15.6.0, available at https://portal.3gpp.org/ as of 7 May 2020, discusses the RRC protocol for the radio interface between UE and NG-RAN.
[3] TS 38.133 v15.5.0, available at https://portal.3gpp.org/ as of 7 May 2020, discusses requirements for support of radio resource management.
[4] TS 38.304 v15.4.0, available at https://portal.3gpp.org/ as of 7 May 2020, discusses the Access Stratum (AS) part of the UE procedures in RRC_IDLE state (also called Idle mode) and RRC_INACTIVE state.

Further prior art can be found in documents WO2018/212523, 3GPP DRAFT; R2-1705806 from KYOCERA titled "Enhanced RLM reporting" and AU2014307257.

### Summary

It is an object of the present disclosure to provide radio link problem information to a network prior to radio link failure occurrence, such that the network may attempt to address the problem before radio link failure occurs.

Embodiments of the disclosure aim to provide apparatus and methods that alleviate some or all of the challenges identified herein.

An aspect of an embodiment of the disclosure provides a method performed by a wireless device for providing a radio link status indication to a network in accordance with claim 1.

A further aspect of an embodiment of the disclosure provides a wireless device for providing a radio link status indication in accordance with claim 17.

### Brief Description of Drawings

For better understanding of the present disclosure, and to show how it may be put into effect, reference will now be made, by way of example only, to the accompanying drawings, in which:
Figure 1A is a diagram of Radio Link Failure due to physical layer problems;
Figure 1B is a reproduction of figure 5.7.5.1-1 from TS 38.331 V 15.6.0, section 5.3.10, and illustrates a process for informing a network of a failure;
Figure 2A is a timing diagram of a method in accordance with some embodiments;
Figure 2B is a schematic diagram of a wireless network in accordance with some embodiments;
Figure 3 is a schematic diagram of a user equipment in accordance with some embodiments;
Figure 4 is a schematic diagram of a virtualization environment in accordance with some embodiments;
Figure 5 is a schematic diagram of a telecommunication network connected via an intermediate network to a host computer in accordance with some embodiments;
Figure 6 is a schematic diagram of a host computer communicating via a base station with a user equipment over a partially wireless connection in accordance with some embodiments;
Figure 7 is a flowchart showing methods implemented in a communication system including a host computer, a base station and a user equipment in accordance with some embodiments;
Figure 8 is a flowchart showing methods implemented in a communication system including a host computer, a base station and a user equipment in accordance with some embodiments;
Figure 9 is a flowchart showing methods implemented in a communication system including a host computer, a base station and a user equipment in accordance with some embodiments;
Figure 10 is a flowchart showing methods implemented in a communication system including a host computer, a base station and a user equipment in accordance with some embodiments;
Figure 11 is a flowchart showing methods in accordance with some embodiments
Figure 12 is a flowchart showing methods in accordance with some embodiments
Figure 13 is a schematic diagram of a virtualization apparatus in accordance with some embodiments;
Figure 14 is a schematic diagram of a virtualization apparatus in accordance with some embodiments;

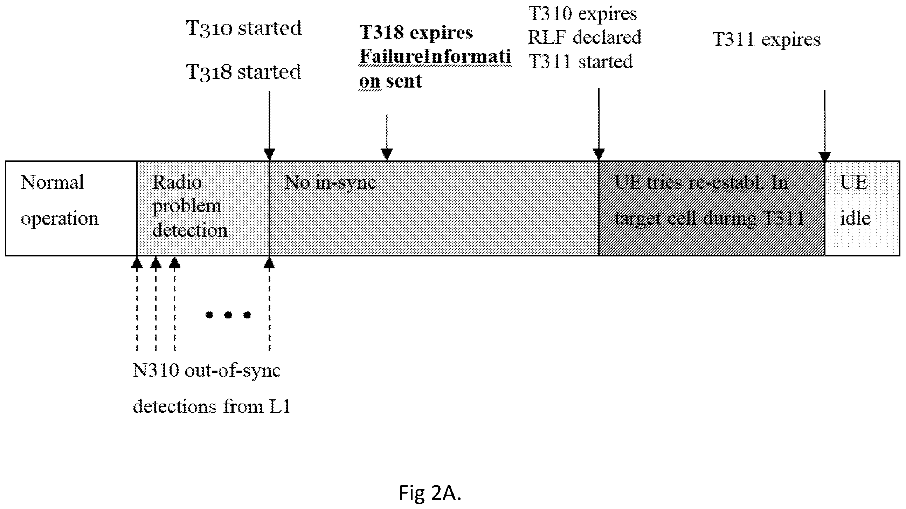

Certain aspects of the present disclosure and their embodiments may provide solutions to these or other challenges. In aspects of embodiments, the UE may utilise a form of early radio link issue indication to inform the network about issues with the radio link, for example, ongoing physical layer problems the UE is experiencing. A method in accordance with an aspect of an embodiment is depicted in Figure 2A. The method may be implemented as an add-on to the current radio link failure procedure described above.

The method involves indicating to the network the detection of physical layer problem in the UE by sending an early radio link issue indication (also referred to as an early radio link failure indication; the message does not indicate that RLF has been declared but instead indicates that RLF will be declared if the radio link issue is not addressed) to the network. The indication may be sent in any suitable form, for example, may be the current Failureinformation message or UEAssistanceinformation message defined in TS 38.331 V.15.6.0 as referenced above.

To control the frequency of indications, the sending of the message may be controlled in some aspects of embodiments by a new timer. This new timer is here referred to herein as T318 and the "first timer"; other names may also be used.

In aspects of embodiments, T318 may be started at the same time as T310 (T310 is also referred to herein as the "second timer"), for example upon receiving N310 consecutive out-of-sync indications (indicators that the wireless device has not correctly synchronized with the network) from lower layers. The value of N310 (also referred to herein as X) may be set to any suitable value, such as the values listed above.

In aspects of embodiments T318 has a shorter expiration time compared to T310, such that the network is warned of the radio link issue before the UE triggers RLF. As an example of this, if the threshold value for T310 (also referred to as the second threshold value) is set to 1000ms (that is, 1 second), the threshold value for T318 (also referred to as the first time interval threshold, the value being Z ms) may be set to 500ms. That is, the second time interval threshold value is typically greater than the first time interval threshold value. A typical range of values for the first time interval threshold is between 0 and 2000ms (so 0 ≤ Z ≤ 2000), although other values may also be used depending on the specific system configuration. In some aspects of embodiments, the first time interval threshold may be set to half of the second time interval threshold.

In some aspects of embodiments, the UE may include measurement information in the failure message to aid the network in reconfiguring the connection.

In aspects of embodiments, T318 may be set to zero duration. Where T318 is set to zero, the early radio link issue indication (for example, a failure information message) is sent immediately upon detection of physical layer problems and starting of T310.

In some aspects of embodiments, if the physical layer problem in the UE is detected as being resolved, e.g. by receiving N311 consecutive "in-sync" indications (indicators that the device has correctly synchronized with the network) for the PCell from lower layers while T310 is running, T318 is stopped, together with T310. The value of N311 (also referred to herein as Y) may be set to any suitable value, such as the values listed above. In addition to being stopped, one or both of T318 and T310 may be reset to zero where N311 consecutive "in-sync" indications have been received.

In an added embodiment of the invention, a UE configured with Carrier Aggregation (CA) can use a SCell with PUCCH/PDCCH resources configured to send the failure message to the network.

Upon receiving the failure report from the UE, the network can take appropriate action to reconfigure the UE to resolve the physical layer problem. The measurement information provided by the UE can be used to e.g. change the PCell by RRC reconfiguration with sync.

Aspects of embodiments may enable a fast PCell recovery procedure by re-activating a deactivated SCell if the deactivated SCell fulfils a certain criterion, such as signal strength and/or quality.

There are, proposed herein, various embodiments which address one or more of the issues disclosed herein. An aspect of an embodiment provides a method performed by a wireless device for providing a radio link status indication to a network, the method comprising: detecting an early radio link issue; and initiating the transmission of an early radio link issue indication. A further aspect of an embodiment provides a method performed by a base station for obtaining a radio link status indication, the method comprising: receiving, by the base station, an early radio link issue indication from a wireless device; and initiating transmission of reconfiguration information to the wireless device based on the early radio link issue indication. Still further aspects of embodiments provide wireless devices and base stations configured to perform the methods described herein.

Certain embodiments may provide one or more of the following technical advantage(s). Fast RLF recovery may be enabled by giving an early indication to the network of an ongoing physical layer problem detected by the UE (wireless device). Thus, the network gets the opportunity to reconfigure the UE and potential service interruption and delays due to the RRC re-establishment procedure may be avoided. Essentially, devices in the network (for example, a base station) may use the period between the reception of the early radio link issue indication from the wireless device and the triggering of the RLF procedure by the wireless device to attempt to reconfigure the radio link and avoid the need for the RLF procedure.

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art. For the avoidance of doubt, the scope of the invention is defined by the claims.

In an aspect of an embodiment of the invention, the method in the UE may contain some or all of the following steps, some of which originate from existing RLF procedures:
- receiving N310 consecutive "out-of-sync" indications for the PCell from lower layers
- starting timer T310
- starting timer T318
- upon receiving N311 consecutive "in-sync" indications for the PCell from lower layers while timer T310 is running,
   ∘ timer T310 is stopped,
   ∘ timer T318 is stopped,
- Upon expiration of T318, sending an early indication of radio link failure to the network

In the method according to aspects of embodiments, the early indication of radio link failure may be included in one or more of following messages:
- *FailureInformation* message
- *UEAssistanceInformation* message
- Any other existing RRC message
- A new RRC message

In the method according to aspects of embodiments, the early indication of radio link failure can be transmitted on one or more of
- the PCell
- a configured SCell, containing both PUCCH and PDCCH allocations for the UE.
- Supplementary uplink

To enable the uplink transmission on SCell, the UE may send a scheduling request on a PUCCH resource of the SCell. If SCell is configured with PDCCH resources, the UE then monitors PDCCH of SCell for subsequent UL grant.

### Example implementation

The following text provides an example implementation according to an aspect of an embodiment, based on procedural text in NR RRC specification TS 38.331 (as discussed above). In this example, the Failure Information procedure is used for reporting the early radio link failure.

### 5.3.10 Radio link failure related actions

### 5.3.10.1 Detection of physical layer problems in RRC_CONNECTED

The UE shall:
1> upon receiving N310 consecutive "out-of-sync" indications for the SpCell from lower layers while neither T300, T301, T304, T311 nor T319 are running:
   2> start timer T310 for the corresponding SpCell.
   2> if the SpCell is a PCell and MR-DC is not configured:
3> start timer T318 for the corresponding PCell.

### 5.3.10.2 Recovery of physical layer problems

Upon receiving N311 consecutive "in-sync" indications for the SpCell from lower layers while T310 is running, the UE shall:
1> stop timer T310 for the corresponding SpCell.
1> stop timer T318 for the corresponding SpCell, if running.
NOTE 1: In this case, the UE maintains the RRC connection without explicit signalling, i.e. the UE maintains the entire radio resource configuration.
NOTE 2: Periods in time where neither "in-sync" nor "out-of-sync" is reported by L1 do not affect the evaluation of the number of consecutive "in-sync" or "out-of-sync" indications.

### 5.3.10.3a Detection of early radio link failure

The UE shall:
1> upon T318 expiry in PCell;
1> initiate the failure information procedure as specified in 5.7.5 to report early radio link failure;

### 5.3.10.3 Detection of radio link failure

The UE shall:
1> upon T310 expiry in PCell; or
1> upon random access problem indication from MCG MAC while neither T300, T301, T304, T311 nor T319 are running; or
1> upon indication from MCG RLC that the maximum number of retransmissions has been reached:
   2> if the indication is from MCG RLC and CA duplication is configured and activated, and for the corresponding logical channel *allowedServingCells* only includes SCell(s):
      3> initiate the failure information procedure as specified in 5.7.5 to report RLC failure.
   2> else:
      3> consider radio link failure to be detected for the MCG i.e. RLF;
      3> if AS security has not been activated:
         4> perform the actions upon going to RRC_IDLE as specified in 5.3.11, with release cause 'other';-
      3> else if AS security has been activated but SRB2 and at least one DRB have not been setup:
         4> perform the actions upon going to RRC_IDLE as specified in 5.3.11, with release cause 'RRC connection failure';
      3> else:
         4> initiate the connection re-establishment procedure as specified in 5.3.7.

The UE shall:
1> upon T310 expiry in PSCell; or
1> upon random access problem indication from SCG MAC; or
1> upon indication from SCG RLC that the maximum number of retransmissions has been reached:
   2> if the indication is from SCG RLC and CA duplication is configured and activated; and for the corresponding logical channel *allowedServingCells* only includes SCell(s):
      3> initiate the failure information procedure as specified in 5.7.5 to report RLC failure.
   2> else:
      3> consider radio link failure to be detected for the SCG, i.e. SCG RLF;
      3> initiate the SCG failure information procedure as specified in 5.7.3 to report SCG radio link failure.

### 5.7.5 Failure information

### 5.7.5.1 General

Figure 1B shows Figure 5.7.5.1-1 from TS 38.331 V 15.6.0, section 5.3.10, and illustrates the procedure for informing the network of radio link failure.

The purpose of this procedure is to inform the network about a failure detected by the UE.

### 5.7.5.2 Initiation

A UE initiates the procedure when there is a need inform the network about a failure detected by the UE. In particular, the UE initiates the procedure when the following condition is met:
1> upon detecting failure for an RLC bearer, in accordance with 5.3.10.3;

Upon initiating the procedure, the UE shall:
1> initiate transmission of the *FailureInformation* message as specified in 5.7.5.3;

### 5.7.5.2a Setting the contents of MeasResultMCG-Failure

The UE shall set the contents of the *MeasResultMCG-Failure* as follows:
1> for each *MeasObjectNR* configured on NR MCG for which a *measId* is configured and measurement results are available:
   2> include an entry in *measResultsPerMOList*;
   2> if there is a *measId* configured with the *MeαsObjectNR* and a *reportConfig* which has *rsType* set to *ssb*:
      3> set *ssbFrequency* to the value indicated by *ssbFrequency* as included in the *MeαsObjectNR;*
   2> if there is a *measId* configured with the *MeαsObjectNR* and a *reportConfig* which has *rsType* set to *csi-rs*:
      3> set *refFreqCSI-RS* to the value indicated by *refFreqCSI-RS* as included in the associated measurement object;
   2> if a serving cell is associated with the *MeαsObjectNR*:
      3> set *measResultServingCell* to include the available quantities of the concerned cell and in accordance with the performance requirements in TS 38.133 [14];
   2> set the *measResultNeighCellList* to include the best measured cells, ordered such that the best cell is listed first, and based on measurements collected up to the moment the UE detected the failure, and set its fields as follows;
      3> ordering the cells with sorting as follows:
         4> based on SS/PBCH block if SS/PBCH block measurement results are available and otherwise based on CSI-RS;
         4> using RSRP if RSRP measurement results are available, otherwise using RSRQ if RSRQ measurement results are available, otherwise using SINR;
      3> for each neighbour cell included:
         4> include the optional fields that are available.
NOTE: The measured quantities are filtered by the L3 filter as configured in the mobility measurement configuration. The measurements are based on the time domain measurement resource restriction, if configured. Blacklisted cells are not required to be reported.

### 5.7.5.3 Actions related to transmission of FailureInformation message The UE shall:

1> if initiated to provide RLC failure information:
   2> set *logicαlChαnnelIdentity* to the logical channel identity of the failing RLC bearer;
   2> set *cellGroupId* to the cell group identity of the failing RLC bearer;
   2> set *failureType* to the type of failure that was detected;
1> else if initiated to provide early radio link failure information:
   2> set *fαilureType* as t318-Expiry;
   2> include and set *MeαsResultMCG*-Failure in accordance with 5.7.5.2a;
   2> for each NR frequency the UE is configured to measure by a *MeαsConfig* associate with the MCG and for which measurement results are available:
      3> set the *measResultFreqList* to include the best measured cells, ordered such that the best cell is listed first using RSRP to order if RSRP measurement results are available for cells on this frequency, otherwise using RSRQ to order if RSRQ measurement results are available for cells on this frequency, otherwise using SINR to order, and based on measurements collected up to the moment the UE detected the failure, and for each cell that is included, include the optional fields that are available;
1> if used to inform the network about a failure for an MCG RLC bearer:
   2> submit the *FailureInformation* message to lower layers for transmission via SRB1;
1> else if used to inform the network about a failure for an SCG RLC bearer:
   2> if SRB3 is configured;
      3> submit the *FailureInformation* message to lower layers for transmission via SRB3;
   2> else;
      3> if the UE is in (NG)EN-DC:
         4> submit the *FailureInformation* message via the E-UTRA MCG embedded in E-UTRA RRC message *ULInformationTransferMRDC* as specified in TS 36.331 [10].
      3> else if the UE is in NR-DC:
         4> submit the *FailureInformation* message via the NR MCG embedded in NR RRC message *ULInformationTransferMRDC* as specified in section 5.7.2a.3.
1> else if used to inform the network about early radio link failure:
   2> if UE is configured with SCell with configured PUCCH resource:
      3> Select PUCCH resource for SR transmission on the corresponding SCell;
   2> submit the *FailureInformation* message to lower layers for transmission via SRB1;

### - FailureInformation

The FailureInformation message is used to inform the network about a failure detected by the UE.
Signalling radio bearer: SRB1 or SRB3
RLC-SAP: AM
Logical channel: DCCH
Direction: UE to network

### Failureinformation message

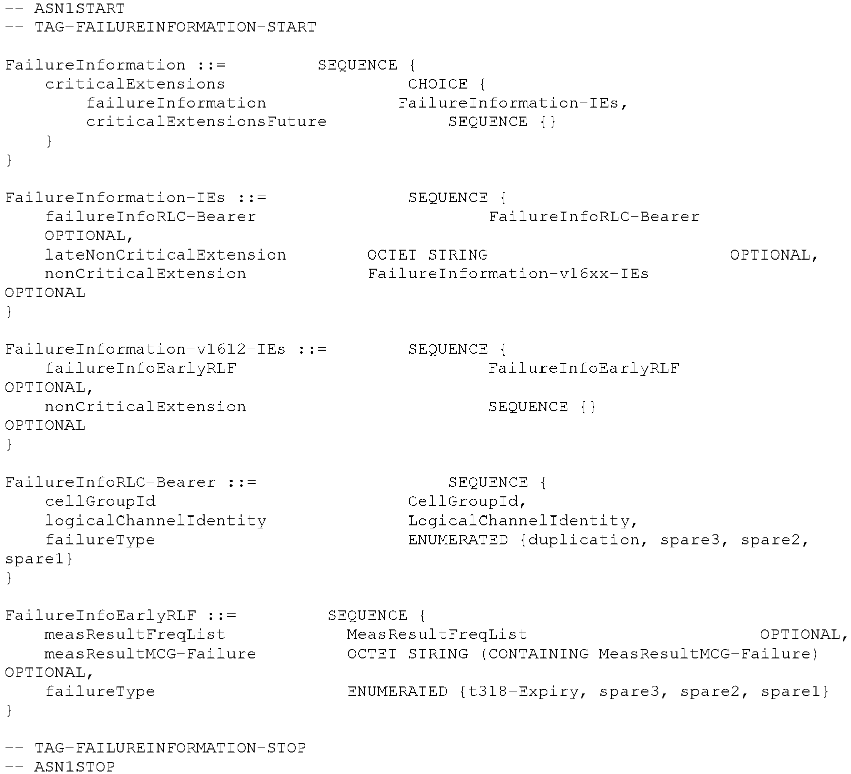

| ***FailureInformation field descriptions*** |
|---|
| ***measResultFreqList*** |
| The field contains available results of measurements on NR frequencies the UE is configured to measure by *measConfig.* |

| ***measResultMCG-Failure*** |
|---|
| The field contains the *MeasResultMCG-Failure* IE which includes available results of measurements on NR frequencies the UE is configured to measure by the NR SCG *RRCReconfiguration* message. |

### - MeasResultMCG-Failure

The IE *MeasResultMCG-Failure* is used to provide information regarding failures detected by the UE.

### MeasResultMCG-Failure information element

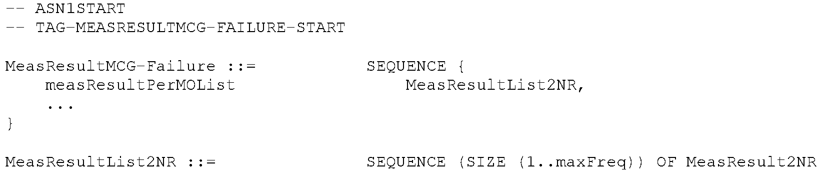

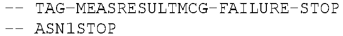

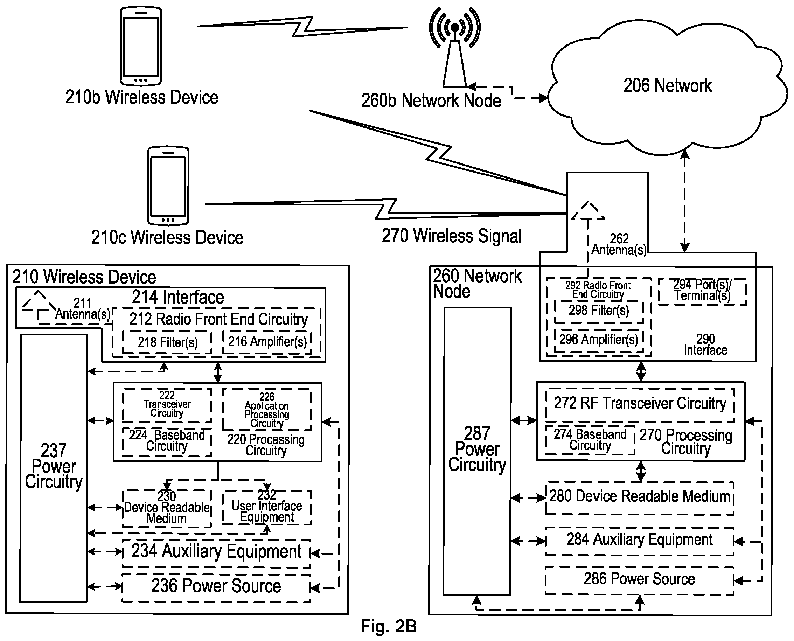

Although the subject matter described herein may be implemented in any appropriate type of system using any suitable components, the embodiments disclosed herein are described in relation to a wireless network, such as the example wireless network illustrated in Figure 2B. For simplicity, the wireless network of Figure 2B only depicts network 206, network nodes 260 and 260b, and WDs 210, 210b, and 210c. In practice, a wireless network may further include any additional elements suitable to support communication between wireless devices or between a wireless device and another communication device, such as a landline telephone, a service provider, or any other network node or end device. Of the illustrated components, network node 260 and wireless device (WD) 210 are depicted with additional detail. The wireless network may provide communication and other types of services to one or more wireless devices to facilitate the wireless devices' access to and/or use of the services provided by, or via, the wireless network. In particular, the wireless devices and network nodes may be configured to perform the methods as discussed herein for providing and obtaining radio link information, respectively.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards. The wireless devices within the wireless network may utilise any combination of RATs.

Network 206 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 260 and WD 210 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections. Network node 260 and WD 210 may perform methods to obtain and provide (respectively) radio link status indicators, as discussed herein with reference to aspects of embodiments.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In Figure 2B, network node 260 includes processing circuitry 270, device readable medium 280, interface 290, auxiliary equipment 284, power source 286, power circuitry 287, and antenna 262. Although network node 260 illustrated in the example wireless network of Figure 2B may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 260 are depicted as single boxes located within a larger box, or nested within multiple boxes, in practice, a network node may comprise multiple different physical components that make up a single illustrated component (e.g., device readable medium 280 may comprise multiple separate hard drives as well as multiple RAM modules).

Similarly, network node 260 may be composed of multiple physically separate components (e.g., a NodeB component and a RNC component, or a BTS component and a BSC component, etc.), which may each have their own respective components. In certain scenarios in which network node 260 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node 260 may be configured to support multiple radio access technologies (RATs). In such embodiments, some components may be duplicated (e.g., separate device readable medium 280 for the different RATs) and some components may be reused (e.g., the same antenna 262 may be shared by the RATs). Network node 260 may also include multiple sets of the various illustrated components for different wireless technologies integrated into network node 260, such as, for example, GSM, WCDMA, LTE, NR, WiFi, or Bluetooth wireless technologies. These wireless technologies may be integrated into the same or different chip or set of chips and other components within network node 260.

Processing circuitry 270 is configured to perform any determining, calculating, or similar operations (e.g., certain obtaining operations) described herein as being provided by a network node. These operations performed by processing circuitry 270 may include processing information obtained by processing circuitry 270 by, for example, converting the obtained information into other information, comparing the obtained information or converted information to information stored in the network node, and/or performing one or more operations based on the obtained information or converted information, and as a result of said processing making a determination.

Processing circuitry 270 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 260 components, such as device readable medium 280, network node 260 functionality. For example, processing circuitry 270 may execute instructions stored in device readable medium 280 or in memory within processing circuitry 270. Such functionality may include providing any of the various wireless features, functions, or benefits discussed herein. In some embodiments, processing circuitry 270 may include a system on a chip (SOC).

In some embodiments, processing circuitry 270 may include one or more of radio frequency (RF) transceiver circuitry 272 and baseband processing circuitry 274. In some embodiments, radio frequency (RF) transceiver circuitry 272 and baseband processing circuitry 274 may be on separate chips (or sets of chips), boards, or units, such as radio units and digital units. In alternative embodiments, part or all of RF transceiver circuitry 272 and baseband processing circuitry 274 may be on the same chip or set of chips, boards, or units

In certain embodiments, some or all of the functionality described herein as being provided by a network node, base station, eNB or other such network device may be performed by processing circuitry 270 executing instructions stored on device readable medium 280 or memory within processing circuitry 270. In alternative embodiments, some or all of the functionality may be provided by processing circuitry 270 without executing instructions stored on a separate or discrete device readable medium, such as in a hard-wired manner. In any of those embodiments, whether executing instructions stored on a device readable storage medium or not, processing circuitry 270 can be configured to perform the described functionality. The benefits provided by such functionality are not limited to processing circuitry 270 alone or to other components of network node 260, but are enjoyed by network node 260 as a whole, and/or by end users and the wireless network generally.

Device readable medium 280 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 270. Device readable medium 280 may store any suitable instructions, data or information, including a computer program, software, an application including one or more of logic, rules, code, tables, etc. and/or other instructions capable of being executed by processing circuitry 270 and, utilized by network node 260. Device readable medium 280 may be used to store any calculations made by processing circuitry 270 and/or any data received via interface 290. In some embodiments, processing circuitry 270 and device readable medium 280 may be considered to be integrated.

Interface 290 is used in the wired or wireless communication of signalling and/or data between network node 260, network 206, and/or WDs 210. As illustrated, interface 290 comprises port(s)/terminal(s) 294 to send and receive data, for example to and from network 206 over a wired connection. Interface 290 also includes radio front end circuitry 292 that may be coupled to, or in certain embodiments a part of, antenna 262. Radio front end circuitry 292 comprises filters 298 and amplifiers 296. Radio front end circuitry 292 may be connected to antenna 262 and processing circuitry 270. Radio front end circuitry may be configured to condition signals communicated between antenna 262 and processing circuitry 270. Radio front end circuitry 292 may receive digital data that is to be sent out to other network nodes or WDs via a wireless connection. Radio front end circuitry 292 may convert the digital data into a radio signal having the appropriate channel and bandwidth parameters using a combination of filters 298 and/or amplifiers 296. The radio signal may then be transmitted via antenna 262. Similarly, when receiving data, antenna 262 may collect radio signals which are then converted into digital data by radio front end circuitry 292. The digital data may be passed to processing circuitry 270. In other embodiments, the interface may comprise different components and/or different combinations of components.

In certain alternative embodiments, network node 260 may not include separate radio front end circuitry 292, instead, processing circuitry 270 may comprise radio front end circuitry and may be connected to antenna 262 without separate radio front end circuitry 292. Similarly, in some embodiments, all or some of RF transceiver circuitry 272 may be considered a part of interface 290. In still other embodiments, interface 290 may include one or more ports or terminals 294, radio front end circuitry 292, and RF transceiver circuitry 272, as part of a radio unit (not shown), and interface 290 may communicate with baseband processing circuitry 274, which is part of a digital unit (not shown).

Antenna 262 may include one or more antennas, or antenna arrays, configured to send and/or receive wireless signals. Antenna 262 may be coupled to radio front end circuitry 290 and may be any type of antenna capable of transmitting and receiving data and/or signals wirelessly. In some embodiments, antenna 262 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 262 may be separate from network node 260 and may be connectable to network node 260 through an interface or port.

Antenna 262, interface 290, and/or processing circuitry 270 may be configured to perform any receiving operations and/or certain obtaining operations described herein as being performed by a network node. Any information, data and/or signals may be received from a wireless device, another network node and/or any other network equipment. Similarly, antenna 262, interface 290, and/or processing circuitry 270 may be configured to perform any transmitting operations described herein as being performed by a network node. Any information, data and/or signals may be transmitted to a wireless device, another network node and/or any other network equipment.

Power circuitry 287 may comprise, or be coupled to, power management circuitry and is configured to supply the components of network node 260 with power for performing the functionality described herein. Power circuitry 287 may receive power from power source 286. Power source 286 and/or power circuitry 287 may be configured to provide power to the various components of network node 260 in a form suitable for the respective components (e.g., at a voltage and current level needed for each respective component). Power source 286 may either be included in, or external to, power circuitry 287 and/or network node 260. For example, network node 260 may be connectable to an external power source (e.g., an electricity outlet) via an input circuitry or interface such as an electrical cable, whereby the external power source supplies power to power circuitry 287. As a further example, power source 286 may comprise a source of power in the form of a battery or battery pack which is connected to, or integrated in, power circuitry 287. The battery may provide backup power should the external power source fail. Other types of power sources, such as photovoltaic devices, may also be used.

Alternative embodiments of network node 260 may include additional components beyond those shown in Figure 2 that may be responsible for providing certain aspects of the network node's functionality, including any of the functionality described herein and/or any functionality necessary to support the subject matter described herein. For example, network node 260 may include user interface equipment to allow input of information into network node 260 and to allow output of information from network node 260. This may allow a user to perform diagnostic, maintenance, repair, and other administrative functions for network node 260.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc.. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-loT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 210 includes antenna 211, interface 214, processing circuitry 220, device readable medium 230, user interface equipment 232, auxiliary equipment 234, power source 236 and power circuitry 237. WD 210 may include multiple sets of one or more of the illustrated components for different wireless technologies supported by WD 210, such as, for example, GSM, WCDMA, LTE, NR, WiFi, WiMAX, or Bluetooth wireless technologies, just to mention a few. These wireless technologies may be integrated into the same or different chips or set of chips as other components within WD 210.

Antenna 211 may include one or more antennas or antenna arrays, configured to send and/or receive wireless signals, and is connected to interface 214. In certain alternative embodiments, antenna 211 may be separate from WD 210 and be connectable to WD 210 through an interface or port. Antenna 211, interface 214, and/or processing circuitry 220 may be configured to perform any receiving or transmitting operations described herein as being performed by a WD. Any information, data and/or signals may be received from a network node and/or another WD. In some embodiments, radio front end circuitry and/or antenna 211 may be considered an interface.

As illustrated, interface 214 comprises radio front end circuitry 212 and antenna 211. Radio front end circuitry 212 comprise one or more filters 218 and amplifiers 216. Radio front end circuitry 214 is connected to antenna 211 and processing circuitry 220, and is configured to condition signals communicated between antenna 211 and processing circuitry 220. Radio front end circuitry 212 may be coupled to or a part of antenna 211. In some embodiments, WD 210 may not include separate radio front end circuitry 212; rather, processing circuitry 220 may comprise radio front end circuitry and may be connected to antenna 211. Similarly, in some embodiments, some or all of RF transceiver circuitry 222 may be considered a part of interface 214. Radio front end circuitry 212 may receive digital data that is to be sent out to other network nodes or WDs via a wireless connection. Radio front end circuitry 212 may convert the digital data into a radio signal having the appropriate channel and bandwidth parameters using a combination of filters 218 and/or amplifiers 216. The radio signal may then be transmitted via antenna 211. Similarly, when receiving data, antenna 211 may collect radio signals which are then converted into digital data by radio front end circuitry 212. The digital data may be passed to processing circuitry 220. In other embodiments, the interface may comprise different components and/or different combinations of components.

Processing circuitry 220 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 210 components, such as device readable medium 230, WD 210 functionality. Such functionality may include providing any of the various wireless features or benefits discussed herein. For example, processing circuitry 220 may execute instructions stored in device readable medium 230 or in memory within processing circuitry 220 to provide the functionality disclosed herein, including the functionality to provide radio link status information in accordance with aspects of embodiments.

As illustrated, processing circuitry 220 includes one or more of RF transceiver circuitry 222, baseband processing circuitry 224, and application processing circuitry 226. In other embodiments, the processing circuitry may comprise different components and/or different combinations of components. In certain embodiments processing circuitry 220 of WD 210 may comprise a SOC. In some embodiments, RF transceiver circuitry 222, baseband processing circuitry 224, and application processing circuitry 226 may be on separate chips or sets of chips. In alternative embodiments, part or all of baseband processing circuitry 224 and application processing circuitry 226 may be combined into one chip or set of chips, and RF transceiver circuitry 222 may be on a separate chip or set of chips. In still alternative embodiments, part or all of RF transceiver circuitry 222 and baseband processing circuitry 224 may be on the same chip or set of chips, and application processing circuitry 226 may be on a separate chip or set of chips. In yet other alternative embodiments, part or all of RF transceiver circuitry 222, baseband processing circuitry 224, and application processing circuitry 226 may be combined in the same chip or set of chips. In some embodiments, RF transceiver circuitry 222 may be a part of interface 214. RF transceiver circuitry 222 may condition RF signals for processing circuitry 220.

In certain embodiments, some or all of the functionality described herein as being performed by a WD may be provided by processing circuitry 220 executing instructions stored on device readable medium 230, which in certain embodiments may be a computer-readable storage medium. In alternative embodiments, some or all of the functionality may be provided by processing circuitry 220 without executing instructions stored on a separate or discrete device readable storage medium, such as in a hard-wired manner. In any of those particular embodiments, whether executing instructions stored on a device readable storage medium or not, processing circuitry 220 can be configured to perform the described functionality. The benefits provided by such functionality are not limited to processing circuitry 220 alone or to other components of WD 210, but are enjoyed by WD 210 as a whole, and/or by end users and the wireless network generally.

Processing circuitry 220 may be configured to perform any determining, calculating, or similar operations (e.g., certain obtaining operations) described herein as being performed by a WD. These operations, as performed by processing circuitry 220, may include processing information obtained by processing circuitry 220 by, for example, converting the obtained information into other information, comparing the obtained information or converted information to information stored by WD 210, and/or performing one or more operations based on the obtained information or converted information, and as a result of said processing making a determination.

Device readable medium 230 may be operable to store a computer program, software, an application including one or more of logic, rules, code, tables, etc. and/or other instructions capable of being executed by processing circuitry 220. Device readable medium 230 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 220. In some embodiments, processing circuitry 220 and device readable medium 230 may be considered to be integrated.

User interface equipment 232 may provide components that allow for a human user to interact with WD 210. Such interaction may be of many forms, such as visual, audial, tactile, etc. User interface equipment 232 may be operable to produce output to the user and to allow the user to provide input to WD 210. The type of interaction may vary depending on the type of user interface equipment 232 installed in WD 210. For example, if WD 210 is a smart phone, the interaction may be via a touch screen; if WD 210 is a smart meter, the interaction may be through a screen that provides usage (e.g., the number of gallons used) or a speaker that provides an audible alert (e.g., if smoke is detected). User interface equipment 232 may include input interfaces, devices and circuits, and output interfaces, devices and circuits. User interface equipment 232 is configured to allow input of information into WD 210, and is connected to processing circuitry 220 to allow processing circuitry 220 to process the input information. User interface equipment 232 may include, for example, a microphone, a proximity or other sensor, keys/buttons, a touch display, one or more cameras, a USB port, or other input circuitry. User interface equipment 232 is also configured to allow output of information from WD 210, and to allow processing circuitry 220 to output information from WD 210. User interface equipment 232 may include, for example, a speaker, a display, vibrating circuitry, a USB port, a headphone interface, or other output circuitry. Using one or more input and output interfaces, devices, and circuits, of user interface equipment 232, WD 210 may communicate with end users and/or the wireless network, and allow them to benefit from the functionality described herein.

Auxiliary equipment 234 is operable to provide more specific functionality which may not be generally performed by WDs. This may comprise specialized sensors for doing measurements for various purposes, interfaces for additional types of communication such as wired communications etc. The inclusion and type of components of auxiliary equipment 234 may vary depending on the embodiment and/or scenario.

Power source 236 may, in some embodiments, be in the form of a battery or battery pack. Other types of power sources, such as an external power source (e.g., an electricity outlet), photovoltaic devices or power cells, may also be used. WD 210 may further comprise power circuitry 237 for delivering power from power source 236 to the various parts of WD 210 which need power from power source 236 to carry out any functionality described or indicated herein. Power circuitry 237 may in certain embodiments comprise power management circuitry. Power circuitry 237 may additionally or alternatively be operable to receive power from an external power source; in which case WD 210 may be connectable to the external power source (such as an electricity outlet) via input circuitry or an interface such as an electrical power cable. Power circuitry 237 may also in certain embodiments be operable to deliver power from an external power source to power source 236. This may be, for example, for the charging of power source 236. Power circuitry 237 may perform any formatting, converting, or other modification to the power from power source 236 to make the power suitable for the respective components of WD 210 to which power is supplied.

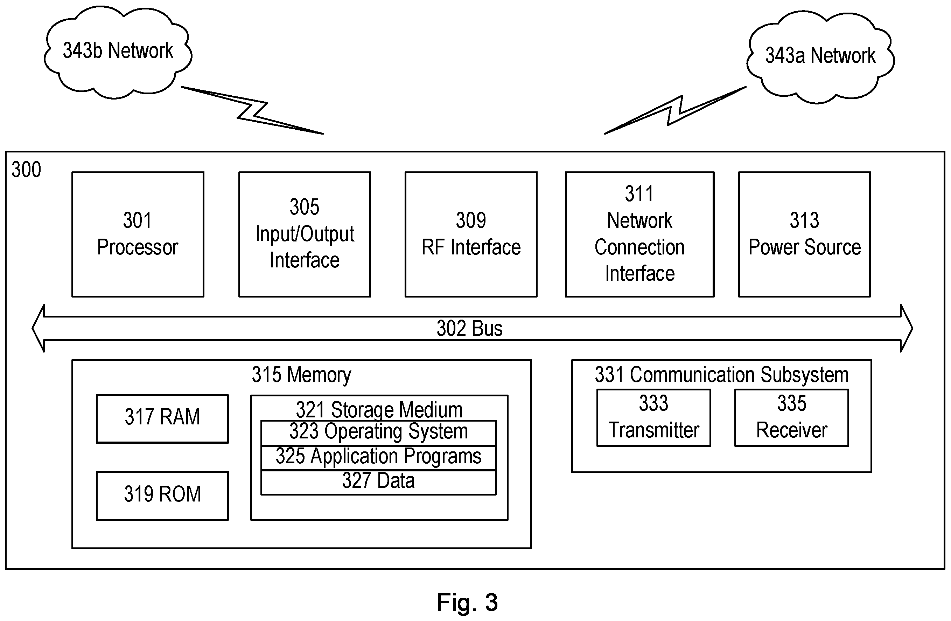

Figure 3 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 300 may be any UE identified by the 3^{rd} Generation Partnership Project (3GPP), including a NB-loT UE, a machine type communication (MTC) UE, and/or an enhanced MTC (eMTC) UE. UE 300, as illustrated in Figure 3, is one example of a WD configured for communication in accordance with one or more communication standards promulgated by the 3^{rd} Generation Partnership Project (3GPP), such as 3GPP's GSM, UMTS, LTE, and/or 5G standards. As mentioned previously, the term WD and UE may be used interchangeable. Accordingly, although Figure 3 is a UE, the components discussed herein are equally applicable to a WD, and vice-versa.

In Figure 3, UE 300 includes processing circuitry 301 that is operatively coupled to input/output interface 305, radio frequency (RF) interface 309, network connection interface 311, memory 315 including random access memory (RAM) 317, read-only memory (ROM) 319, and storage medium 321 or the like, communication subsystem 331, power source 333, and/or any other component, or any combination thereof. Storage medium 321 includes operating system 323, application program 325, and data 327. In other embodiments, storage medium 321 may include other similar types of information. Certain UEs may utilize all of the components shown in Figure 3, or only a subset of the components. The level of integration between the components may vary from one UE to another UE. Further, certain UEs may contain multiple instances of a component, such as multiple processors, memories, transceivers, transmitters, receivers, etc.

In Figure 3, processing circuitry 301 may be configured to process computer instructions and data. Processing circuitry 301 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 301 may include two central processing units (CPUs). Data may be information in a form suitable for use by a computer.

In the depicted embodiment, input/output interface 305 may be configured to provide a communication interface to an input device, output device, or input and output device. UE 300 may be configured to use an output device via input/output interface 305. An output device may use the same type of interface port as an input device. For example, a USB port may be used to provide input to and output from UE 300. The output device may be a speaker, a sound card, a video card, a display, a monitor, a printer, an actuator, an emitter, a smartcard, another output device, or any combination thereof. UE 300 may be configured to use an input device via input/output interface 305 to allow a user to capture information into UE 300. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In Figure 3, RF interface 309 may be configured to provide a communication interface to RF components such as a transmitter, a receiver, and an antenna. Network connection interface 311 may be configured to provide a communication interface to network 343a. Network 343a may encompass wired and/or wireless networks such as a local-area network (LAN), a wide-area network (WAN), a computer network, a wireless network, a telecommunications network, another like network or any combination thereof. For example, network 343a may comprise a Wi-Fi network. Network connection interface 311 may be configured to include a receiver and a transmitter interface used to communicate with one or more other devices over a communication network according to one or more communication protocols, such as Ethernet, TCP/IP, SONET, ATM, or the like. Network connection interface 311 may implement receiver and transmitter functionality appropriate to the communication network links (e.g., optical, electrical, and the like). The transmitter and receiver functions may share circuit components, software or firmware, or alternatively may be implemented separately.

RAM 317 may be configured to interface via bus 302 to processing circuitry 301 to provide storage or caching of data or computer instructions during the execution of software programs such as the operating system, application programs, and device drivers. ROM 319 may be configured to provide computer instructions or data to processing circuitry 301. For example, ROM 319 may be configured to store invariant low-level system code or data for basic system functions such as basic input and output (I/O), startup, or reception of keystrokes from a keyboard that are stored in a non-volatile memory. Storage medium 321 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 321 may be configured to include operating system 323, application program 325 such as a web browser application, a widget or gadget engine or another application, and data file 327. Storage medium 321 may store, for use by UE 300, any of a variety of various operating systems or combinations of operating systems.

Storage medium 321 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 321 may allow UE 300 to access computer-executable instructions, application programs or the like, stored on transitory or non-transitory memory media, to off-load data, or to upload data. An article of manufacture, such as one utilizing a communication system may be tangibly embodied in storage medium 321, which may comprise a device readable medium.

In Figure 3, processing circuitry 301 may be configured to communicate with network 343b using communication subsystem 331. Network 343a and network 343b may be the same network or networks or different network or networks. Communication subsystem 331 may be configured to include one or more transceivers used to communicate with network 343b. For example, communication subsystem 331 may be configured to include one or more transceivers used to communicate with one or more remote transceivers of another device capable of wireless communication such as another WD, UE, or base station of a radio access network (RAN) according to one or more communication protocols, such as IEEE 802.11, CDMA, WCDMA, GSM, LTE, UTRAN, WiMax, or the like. Each transceiver may include transmitter 333 and/or receiver 335 to implement transmitter or receiver functionality, respectively, appropriate to the RAN links (e.g., frequency allocations and the like). Further, transmitter 333 and receiver 335 of each transceiver may share circuit components, software or firmware, or alternatively may be implemented separately.

In the illustrated embodiment, the communication functions of communication subsystem 331 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 331 may include cellular communication, Wi-Fi communication, Bluetooth communication, and GPS communication. Network 343b may encompass wired and/or wireless networks such as a local-area network (LAN), a wide-area network (WAN), a computer network, a wireless network, a telecommunications network, another like network or any combination thereof. For example, network 343b may be a cellular network, a Wi-Fi network, and/or a near-field network. Power source 313 may be configured to provide alternating current (AC) or direct current (DC) power to components of UE 300.

The features, benefits and/or functions described herein may be implemented in one of the components of UE 300 or partitioned across multiple components of UE 300. Further, the features, benefits, and/or functions described herein may be implemented in any combination of hardware, software or firmware. In one example, communication subsystem 331 may be configured to include any of the components described herein. Further, processing circuitry 301 may be configured to communicate with any of such components over bus 302. In another example, any of such components may be represented by program instructions stored in memory that when executed by processing circuitry 301 perform the corresponding functions described herein. In another example, the functionality of any of such components may be partitioned between processing circuitry 301 and communication subsystem 331. In another example, the non-computationally intensive functions of any of such components may be implemented in software or firmware and the computationally intensive functions may be implemented in hardware.

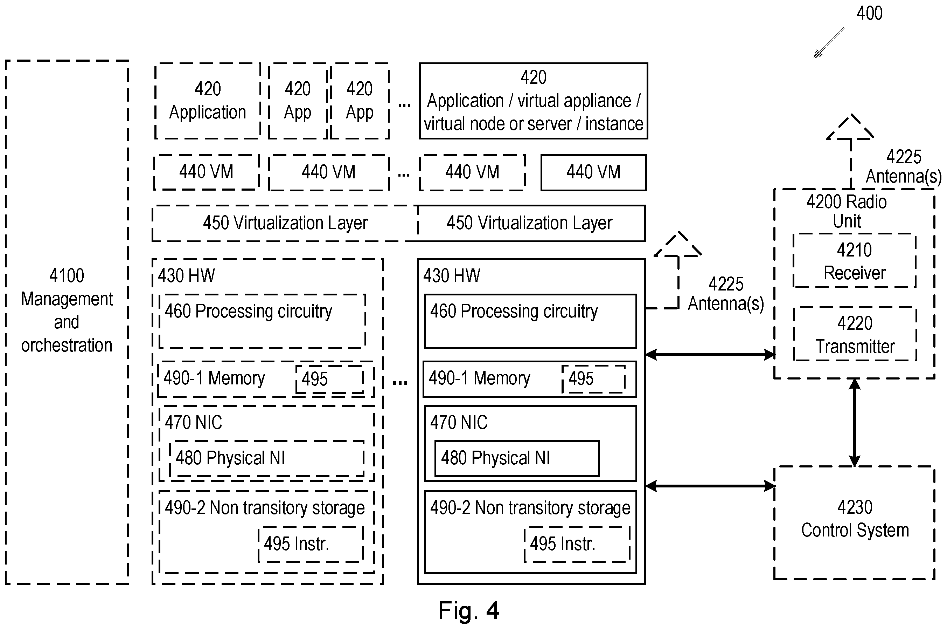

Figure 4 is a schematic block diagram illustrating a virtualization environment 400 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 400 hosted by one or more of hardware nodes 430. Further, in embodiments in which the virtual node is not a radio access node or does not require radio connectivity (e.g., a core network node), then the network node may be entirely virtualized.

The functions may be implemented by one or more applications 420 (which may alternatively be called software instances, virtual appliances, network functions, virtual nodes, virtual network functions, etc.) operative to implement some of the features, functions, and/or benefits of some of the embodiments disclosed herein. Applications 420 are run in virtualization environment 400 which provides hardware 430 comprising processing circuitry 460 and memory 490. Memory 490 contains instructions 495 executable by processing circuitry 460 whereby application 420 is operative to provide one or more of the features, benefits, and/or functions disclosed herein.

Virtualization environment 400, comprises general-purpose or special-purpose network hardware devices 430 comprising a set of one or more processors or processing circuitry 460, which may be commercial off-the-shelf (COTS) processors, dedicated Application Specific Integrated Circuits (ASICs), or any other type of processing circuitry including digital or analog hardware components or special purpose processors. Each hardware device may comprise memory 490-1 which may be non-persistent memory for temporarily storing instructions 495 or software executed by processing circuitry 460. Each hardware device may comprise one or more network interface controllers (NICs) 470, also known as network interface cards, which include physical network interface 480. Each hardware device may also include non-transitory, persistent, machine-readable storage media 490-2 having stored therein software 495 and/or instructions executable by processing circuitry 460. Software 495 may include any type of software including software for instantiating one or more virtualization layers 450 (also referred to as hypervisors), software to execute virtual machines 440 as well as software allowing it to execute functions, features and/or benefits described in relation with some embodiments described herein.

Virtual machines 440, comprise virtual processing, virtual memory, virtual networking or interface and virtual storage, and may be run by a corresponding virtualization layer 450 or hypervisor. Different embodiments of the instance of virtual appliance 420 may be implemented on one or more of virtual machines 440, and the implementations may be made in different ways.

During operation, processing circuitry 460 executes software 495 to instantiate the hypervisor or virtualization layer 450, which may sometimes be referred to as a virtual machine monitor (VMM). Virtualization layer 450 may present a virtual operating platform that appears like networking hardware to virtual machine 440.

As shown in Figure 4, hardware 430 may be a standalone network node with generic or specific components. Hardware 430 may comprise antenna 4225 and may implement some functions via virtualization. Alternatively, hardware 430 may be part of a larger cluster of hardware (e.g. such as in a data center or customer premise equipment (CPE)) where many hardware nodes work together and are managed via management and orchestration (MANO) 4100, which, among others, oversees lifecycle management of applications 420.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 440 may be a software implementation of a physical machine that runs programs as if they were executing on a physical, non-virtualized machine. Each of virtual machines 440, and that part of hardware 430 that executes that virtual machine, be it hardware dedicated to that virtual machine and/or hardware shared by that virtual machine with others of the virtual machines 440, forms a separate virtual network elements (VNE).

Still in the context of NFV, Virtual Network Function (VNF) is responsible for handling specific network functions that run in one or more virtual machines 440 on top of hardware networking infrastructure 430 and corresponds to application 420 in Figure 4.

In some embodiments, one or more radio units 4200 that each include one or more transmitters 4220 and one or more receivers 4210 may be coupled to one or more antennas 4225. Radio units 4200 may communicate directly with hardware nodes 430 via one or more appropriate network interfaces and may be used in combination with the virtual components to provide a virtual node with radio capabilities, such as a radio access node or a base station.

In some embodiments, some signalling can be effected with the use of control system 4230 which may alternatively be used for communication between the hardware nodes 430 and radio units 4200.

With reference to Figure 5, in accordance with an embodiment, a communication system includes telecommunication network 510, such as a 3GPP-type cellular network, which comprises access network 511, such as a radio access network, and core network 514. Access network 511 comprises a plurality of base stations 512a, 512b, 512c, such as NBs, eNBs, gNBs or other types of wireless access points, each defining a corresponding coverage area 513a, 513b, 513c. Each base station 512a, 512b, 512c is connectable to core network 514 over a wired or wireless connection 515. A first UE 591 located in coverage area 513c is configured to wirelessly connect to, or be paged by, the corresponding base station 512c. A second UE 592 in coverage area 513a is wirelessly connectable to the corresponding base station 512a. While a plurality of UEs 591, 592 are illustrated in this example, the disclosed embodiments are equally applicable to a situation where a sole UE is in the coverage area or where a sole UE is connecting to the corresponding base station 512.

Telecommunication network 510 is itself connected to host computer 530, which may be embodied in the hardware and/or software of a standalone server, a cloud-implemented server, a distributed server or as processing resources in a server farm. Host computer 530 may be under the ownership or control of a service provider, or may be operated by the service provider or on behalf of the service provider. Connections 521 and 522 between telecommunication network 510 and host computer 530 may extend directly from core network 514 to host computer 530 or may go via an optional intermediate network 520. Intermediate network 520 may be one of, or a combination of more than one of, a public, private or hosted network; intermediate network 520, if any, may be a backbone network or the Internet; in particular, intermediate network 520 may comprise two or more sub-networks (not shown).

The communication system of Figure 5 as a whole enables connectivity between the connected UEs 591, 592 and host computer 530. The connectivity may be described as an over-the-top (OTT) connection 550. Host computer 530 and the connected UEs 591, 592 are configured to communicate data and/or signaling via OTT connection 550, using access network 511, core network 514, any intermediate network 520 and possible further infrastructure (not shown) as intermediaries. OTT connection 550 may be transparent in the sense that the participating communication devices through which OTT connection 550 passes are unaware of routing of uplink and downlink communications. For example, base station 512 may not or need not be informed about the past routing of an incoming downlink communication with data originating from host computer 530 to be forwarded (e.g., handed over) to a connected UE 591. Similarly, base station 512 need not be aware of the future routing of an outgoing uplink communication originating from the UE 591 towards the host computer 530.

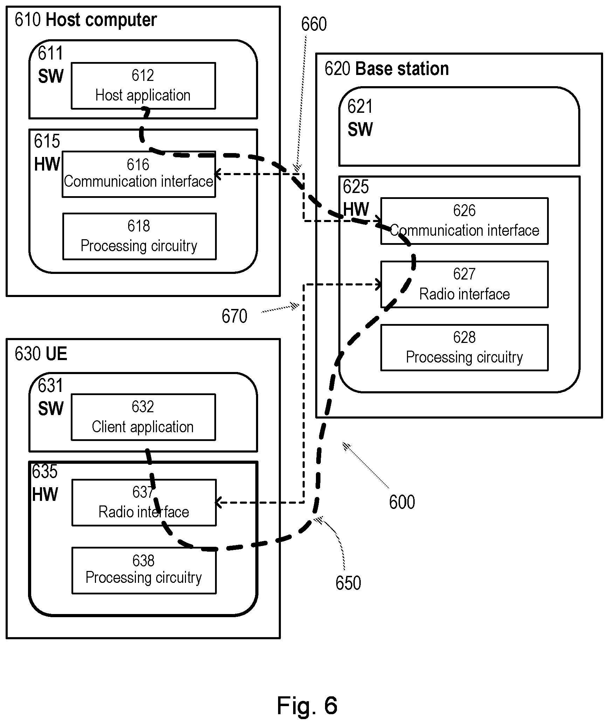

Example implementations, in accordance with an embodiment, of the UE, base station and host computer discussed in the preceding paragraphs will now be described with reference to Figure 6. In communication system 600, host computer 610 comprises hardware 615 including communication interface 616 configured to set up and maintain a wired or wireless connection with an interface of a different communication device of communication system 600. Host computer 610 further comprises processing circuitry 618, which may have storage and/or processing capabilities. In particular, processing circuitry 618 may comprise one or more programmable processors, application-specific integrated circuits, field programmable gate arrays or combinations of these (not shown) adapted to execute instructions. Host computer 610 further comprises software 611, which is stored in or accessible by host computer 610 and executable by processing circuitry 618. Software 611 includes host application 612. Host application 612 may be operable to provide a service to a remote user, such as UE 630 connecting via OTT connection 650 terminating at UE 630 and host computer 610. In providing the service to the remote user, host application 612 may provide user data which is transmitted using OTT connection 650.

Communication system 600 further includes base station 620 provided in a telecommunication system and comprising hardware 625 enabling it to communicate with host computer 610 and with UE 630. Hardware 625 may include communication interface 626 for setting up and maintaining a wired or wireless connection with an interface of a different communication device of communication system 600, as well as radio interface 627 for setting up and maintaining at least wireless connection 670 with UE 630 located in a coverage area (not shown in Figure 6) served by base station 620. Communication interface 626 may be configured to facilitate connection 660 to host computer 610. Connection 660 may be direct or it may pass through a core network (not shown in Figure 6) of the telecommunication system and/or through one or more intermediate networks outside the telecommunication system. In the embodiment shown, hardware 625 of base station 620 further includes processing circuitry 628, which may comprise one or more programmable processors, application-specific integrated circuits, field programmable gate arrays or combinations of these (not shown) adapted to execute instructions. Base station 620 further has software 621 stored internally or accessible via an external connection.

Communication system 600 further includes UE 630 already referred to. Its hardware 635 may include radio interface 637 configured to set up and maintain wireless connection 670 with a base station serving a coverage area in which UE 630 is currently located. Hardware 635 of UE 630 further includes processing circuitry 638, which may comprise one or more programmable processors, application-specific integrated circuits, field programmable gate arrays or combinations of these (not shown) adapted to execute instructions. UE 630 further comprises software 631, which is stored in or accessible by UE 630 and executable by processing circuitry 638. Software 631 includes client application 632. Client application 632 may be operable to provide a service to a human or non-human user via UE 630, with the support of host computer 610. In host computer 610, an executing host application 612 may communicate with the executing client application 632 via OTT connection 650 terminating at UE 630 and host computer 610. In providing the service to the user, client application 632 may receive request data from host application 612 and provide user data in response to the request data. OTT connection 650 may transfer both the request data and the user data. Client application 632 may interact with the user to generate the user data that it provides.

It is noted that host computer 610, base station 620 and UE 630 illustrated in Figure 6 may be similar or identical to host computer 530, one of base stations 512a, 512b, 512c and one of UEs 591, 592 of Figure 5, respectively. This is to say, the inner workings of these entities may be as shown in Figure 6 and independently, the surrounding network topology may be that of Figure 5.

In Figure 6, OTT connection 650 has been drawn abstractly to illustrate the communication between host computer 610 and UE 630 via base station 620, without explicit reference to any intermediary devices and the precise routing of messages via these devices. Network infrastructure may determine the routing, which it may be configured to hide from UE 630 or from the service provider operating host computer 610, or both. While OTT connection 650 is active, the network infrastructure may further take decisions by which it dynamically changes the routing (e.g., on the basis of load balancing consideration or reconfiguration of the network).

Wireless connection 670 between UE 630 and base station 620 is in accordance with the teachings of the embodiments described throughout this disclosure. One or more of the various embodiments improve the performance of OTT services provided to UE 630 using OTT connection 650, in which wireless connection 670 forms the last segment. More precisely, the teachings of these embodiments may improve the rate at which radio link issues are resolved and thereby provide benefits such as reductions in wireless device idle time, reduced instances of RRC re-establishment being required, improved wireless device battery lifetime, and so on.

A measurement procedure may be provided for the purpose of monitoring data rate, latency and other factors on which the one or more embodiments improve. There may further be an optional network functionality for reconfiguring OTT connection 650 between host computer 610 and UE 630, in response to variations in the measurement results. The measurement procedure and/or the network functionality for reconfiguring OTT connection 650 may be implemented in software 611 and hardware 615 of host computer 610 or in software 631 and hardware 635 of UE 630, or both. In embodiments, sensors (not shown) may be deployed in or in association with communication devices through which OTT connection 650 passes; the sensors may participate in the measurement procedure by supplying values of the monitored quantities exemplified above, or supplying values of other physical quantities from which software 611, 631 may compute or estimate the monitored quantities. The reconfiguring of OTT connection 650 may include message format, retransmission settings, preferred routing etc.; the reconfiguring need not affect base station 620, and it may be unknown or imperceptible to base station 620. Such procedures and functionalities may be known and practiced in the art. In certain embodiments, measurements may involve proprietary UE signaling facilitating host computer 610's measurements of throughput, propagation times, latency and the like. The measurements may be implemented in that software 611 and 631 causes messages to be transmitted, in particular empty or 'dummy' messages, using OTT connection 650 while it monitors propagation times, errors etc.

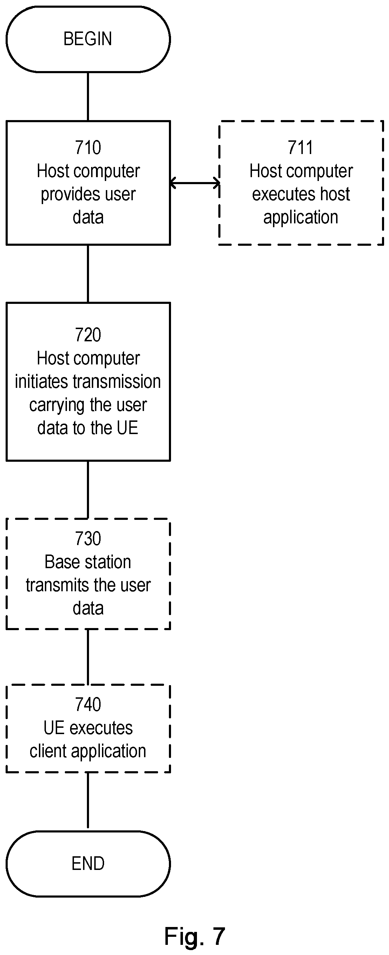

Figure 7 is a flowchart illustrating a method implemented in a communication system, in accordance with one embodiment. The communication system includes a host computer, a base station and a UE which may be those described with reference to Figures 5 and 6. For simplicity of the present disclosure, only drawing references to Figure 7 will be included in this section. In step 710, the host computer provides user data. In substep 711 (which may be optional) of step 710, the host computer provides the user data by executing a host application. In step 720, the host computer initiates a transmission carrying the user data to the UE. In step 730 (which may be optional), the base station transmits to the UE the user data which was carried in the transmission that the host computer initiated, in accordance with the teachings of the embodiments described throughout this disclosure. In step 740 (which may also be optional), the UE executes a client application associated with the host application executed by the host computer.

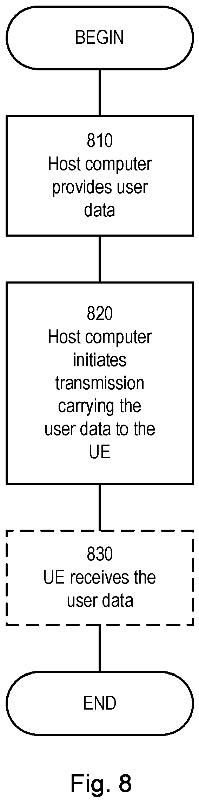

Figure 8 is a flowchart illustrating a method implemented in a communication system, in accordance with one embodiment. The communication system includes a host computer, a base station and a UE which may be those described with reference to Figures 5 and 6. For simplicity of the present disclosure, only drawing references to Figure 8 will be included in this section. In step 810 of the method, the host computer provides user data. In an optional substep (not shown) the host computer provides the user data by executing a host application. In step 820, the host computer initiates a transmission carrying the user data to the UE. The transmission may pass via the base station, in accordance with the teachings of the embodiments described throughout this disclosure. In step 830 (which may be optional), the UE receives the user data carried in the transmission.

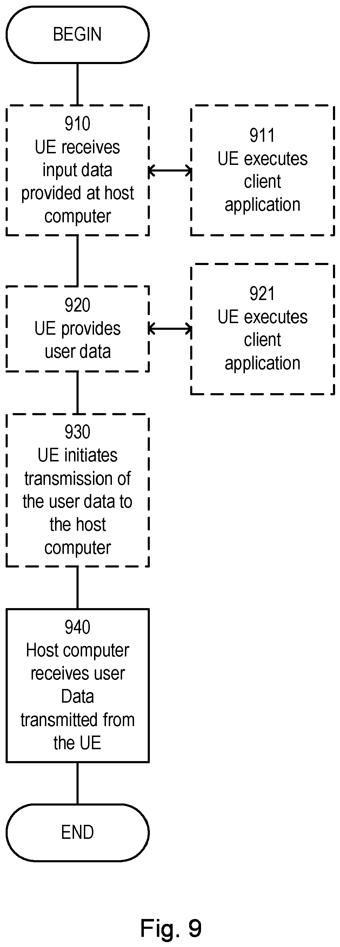

Figure 9 is a flowchart illustrating a method implemented in a communication system, in accordance with one embodiment. The communication system includes a host computer, a base station and a UE which may be those described with reference to Figures 5 and 6. For simplicity of the present disclosure, only drawing references to Figure 9 will be included in this section. In step 910 (which may be optional), the UE receives input data provided by the host computer. Additionally or alternatively, in step 920, the UE provides user data. In substep 921 (which may be optional) of step 920, the UE provides the user data by executing a client application. In substep 911 (which may be optional) of step 910, the UE executes a client application which provides the user data in reaction to the received input data provided by the host computer. In providing the user data, the executed client application may further consider user input received from the user. Regardless of the specific manner in which the user data was provided, the UE initiates, in substep 930 (which may be optional), transmission of the user data to the host computer. In step 940 of the method, the host computer receives the user data transmitted from the UE, in accordance with the teachings of the embodiments described throughout this disclosure.

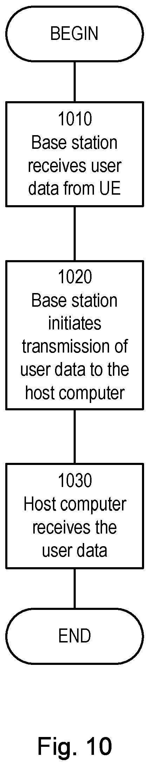

Figure 10 is a flowchart illustrating a method implemented in a communication system, in accordance with one embodiment. The communication system includes a host computer, a base station and a UE which may be those described with reference to Figures 5 and 6. For simplicity of the present disclosure, only drawing references to Figure 10 will be included in this section. In step 1010 (which may be optional), in accordance with the teachings of the embodiments described throughout this disclosure, the base station receives user data from the UE. In step 1020 (which may be optional), the base station initiates transmission of the received user data to the host computer. In step 1030 (which may be optional), the host computer receives the user data carried in the transmission initiated by the base station.

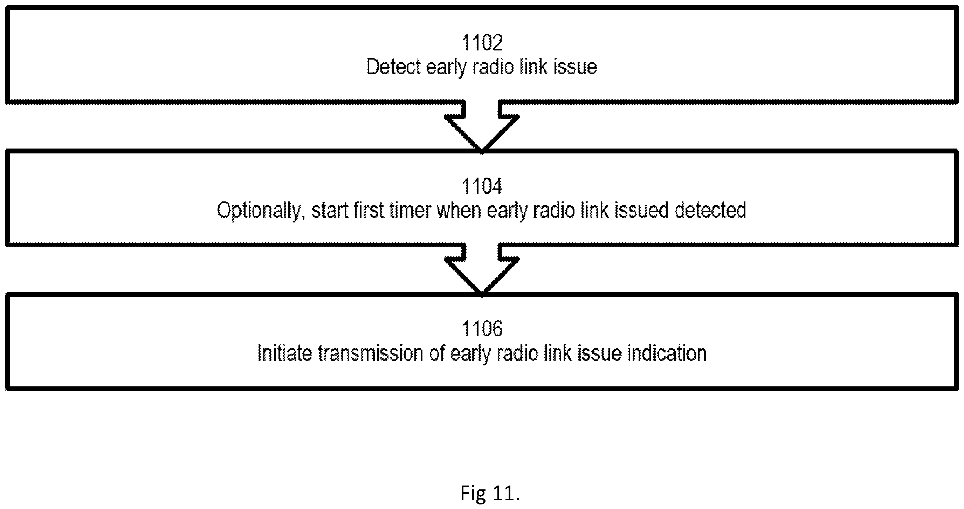

Figure 11 depicts a method in accordance with particular embodiments. The method shown in Figure 11 is executed by a wireless device (WD, also referred to as a user equipment, UE). The method begins at step 1102 with the detection of an early radio link issue. As explained above, the detection may comprise detecting physical layer problems, and in particular may comprise detecting a number (N310, X) consecutive indicators that the wireless device has not correctly synchronised with the network (for example, with a base station). Optionally, the method may further comprise, at step 1104, starting a first timer when the early radio link issue is detected. If the first timer is used, a first time interval threshold (T318, Z) may be set to any suitable value; the value may be set for example by the network or by the wireless device. An example value for the first time interval threshold is 500ms. The method may further comprise, at step 1106, initiating the transmission of an early radio link issue indication (also referred to as an early radio link failure indication). Where optional step 1104 has been performed and a first timer has been started, the transmission may be initiated when the timer reaches the first time interval threshold (T318, Z). In situations where the wireless device is configured to use carrier aggregation, the early radio link issue indication may be sent using a SCell connection when the early radio link issue has been detected on a PCell connection. The initiated transmission may be performed by the wireless device, or by a linked device.

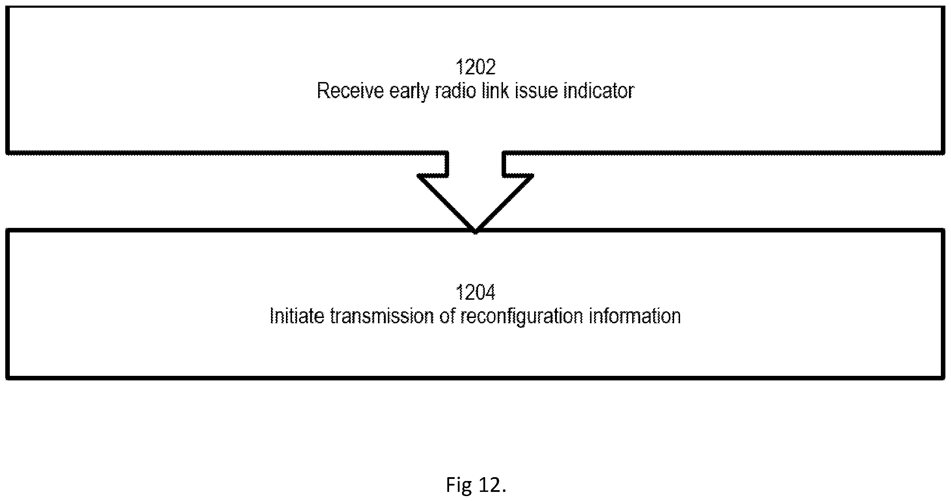

Figure 12 depicts a method in accordance with particular embodiments. The method shown in Figure 12 is executed by a network node (for example, a base station, such as an gNB). The steps of the method may be performed in differing orders, and not all of the steps are necessarily performed. The method may begin at step 1202 with the receiving, from the wireless device, of an early radio link issue indicator. The indicator may be received directly from the wireless device by the base station, or via one or more further devices. The indicator may include measurement information collected by the wireless device, such as measurements of cells collected by the wireless device up to the moment the radio link issue was detected, which may be useful for the base station in performing subsequent steps. The method may further comprise, at step 1204, initiating transmission of reconfiguration information to the wierelss device. The transmission of the reconfiguration information is based on the early radio link issue indication, and may comprise settings or instructions for use by the wireless device in connecting to the network, for example, to the base station. The reconfiguration information may be transmitted directly by the base station to the wireless device, or may be transmitted by another network device.

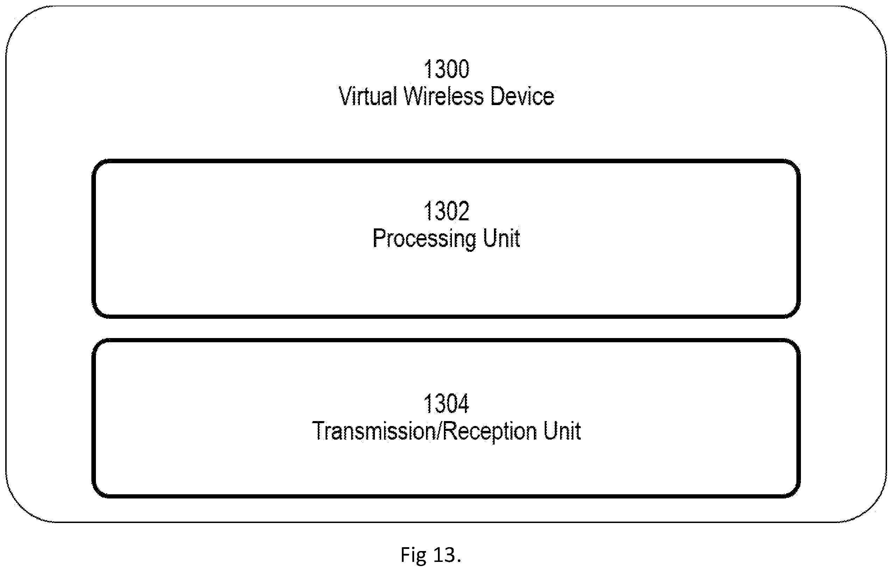

Figure 13 illustrates a schematic block diagram of a virtual wireless device 1300 in a wireless network (for example, the wireless network shown in Figure 2B). The apparatus may be implemented in one or more wireless devices (e.g. forming part of the network 206 shown in Figure 2B). Apparatus 1300 is operable to carry out the example method described with reference to Figure 11 and possibly any other processes or methods disclosed herein. It is also to be understood that the method of Figure 11 is not necessarily carried out solely by apparatus 1300. At least some operations of the method can be performed by one or more other entities.

Virtual Apparatus 1300 may comprise processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory includes program instructions for executing one or more telecommunications and/or data communications protocols as well as instructions for carrying out one or more of the techniques described herein, in several embodiments. In some implementations, the processing circuitry may be used to cause the processing unit 1302 to process information, in particular, to process the information in a message received from another node (such as a base station) via the transmission/reception unit 1304, and to cause the transmission/reception unit 1304 to transmit or initiate transmission to the another node as discussed above, and any other suitable units of apparatus 1300 to perform corresponding functions according one or more embodiments of the present disclosure

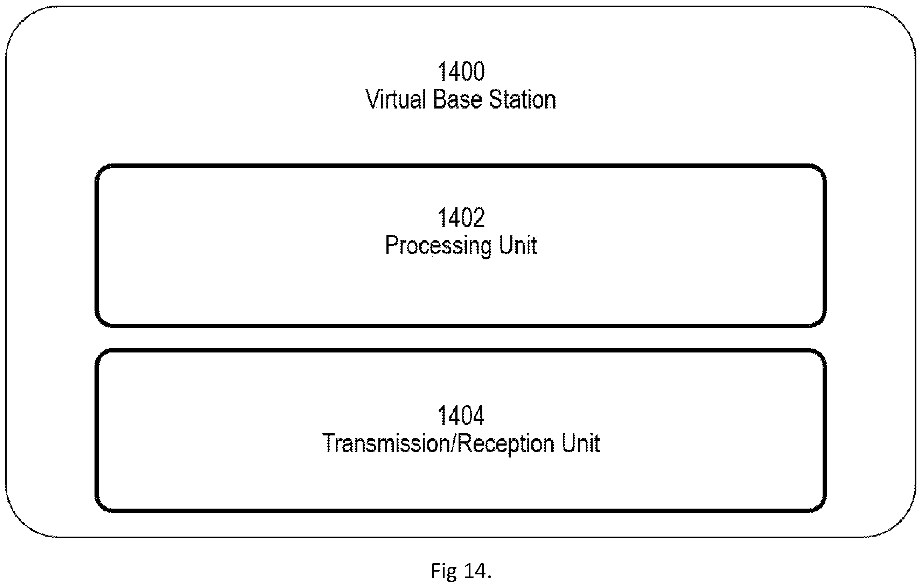

Figure 14 illustrates a schematic block diagram of a virtual base station 1400 in a wireless network (for example, the wireless network shown in Figure 2). The apparatus may be implemented in one or more base stations (e.g. network node 260 shown in Figure 2). Apparatus 1400 is operable to carry out the example method described with reference to Figure 12 and possibly any other processes or methods disclosed herein. It is also to be understood that the method of Figure 12 is not necessarily carried out solely by apparatus 1400. At least some operations of the method can be performed by one or more other entities.

Virtual Apparatus 1400 may comprise processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory includes program instructions for executing one or more telecommunications and/or data communications protocols as well as instructions for carrying out one or more of the techniques described herein, in several embodiments. In some implementations, the processing circuitry may be used to cause the processing unit 1402 to process information, in particular, to process the information in a message received from another device (such as a core network node, another base station or a wireless device) via the transmission/reception unit 1404, and to cause the transmission/reception unit 1404 to transmit or initiate transmission to the another device as discussed above, and any other suitable units of apparatus 1400 to perform corresponding functions according one or more embodiments of the present disclosure.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

### ABBREVIATIONS

At least some of the following abbreviations may be used in this disclosure. If there is an inconsistency between abbreviations, preference should be given to how it is used above. If listed multiple times below, the first listing should be preferred over any subsequent listing(s).
- ACK: Acknowledgement
- AP: Application Protocol
- BSR: Buffer Status Report
- BWP: Bandwidth Part
- C-RNTICell: Radio Network Temporary Identifier
- CA: Carrier Aggregation
- CE: Control Element
- CP: Control Plane
- CQI: Channel Quality Indicator
- DC: Dual Connectivity
- DCI: Downlink Control Information
- DL: Downlink
- DRB: Data Radio Bearer
- eNB: (EUTRAN) base station
- E-RAB: EUTRAN Radio Access Bearer
- FDD: Frequency Division Duplex
- gNB: NR base station
- GTP-U: GPRS Tunneling Protocol - User Plane
- IP: Internet Protocol
- LTE: Long Term Evolution
- MCG: Master Cell Group
- MAC: Medium Access Control
- MeNB: Master eNB
- MgNB: Master gNB
- MN: Master Node
- NACK: Negative Acknowledgement
- NR: New Radio
- PDCP: Packet Data Convergence Protocol
- PCell: Primary Cell
- PCI: Physical Cell Identity
- PSCell: Primary SCell
- PUSCH: Phyical Uplink Shared Channel
- RLC: Radio Link Control
- RLF: Radio Link Failure
- RRC: Radio Resource Control
- SCell: Secondary Cell
- SCG: Secondary Cell Group
- SCTP: Stream Control Transmission Protocol
- SeNB: Secondary eNB
- SINR: Signal to Interference plus Noise Ratio
- SN: Secondary Node
- SR: Scheduling Request
- SRB: Signaling Radio Bearer
- SUL: Supplementary uplink
- TDD: Time Division Duplex
- TEID: Tunnel Endpoint IDentifier
- TNL: Transport Network Layer
- UCI: Uplink Control Information
- UDP: User Datagram Protocol
- UE: User Equipment
- UL: Uplink
- UP: User Plane
- URLLC: Ultra Reliable Low Latency Communication
- X2: interface between base stations

- 1x RTT: CDMA2000 1x Radio Transmission Technology
- 3GPP: 3rd Generation Partnership Project
- 5G: 5th Generation
- ABS: Almost Blank Subframe
- ARQ: Automatic Repeat Request
- AWGN: Additive White Gaussian Noise
- BCCH: Broadcast Control Channel
- BCH: Broadcast Channel
- CC: Carrier Component
- CCCH SDU: Common Control Channel SDU
- CDMA: Code Division Multiplexing Access
- CGI: Cell Global Identifier
- CIR: Channel Impulse Response
- CP: Cyclic Prefix
- CPICH: Common Pilot Channel
- CPICH Ec/No: CPICH Received energy per chip divided by the power density in the band
- CSI: Channel State Information
- DCCH: Dedicated Control Channel
- DM: Demodulation
- DMRS: Demodulation Reference Signal
- DRX: Discontinuous Reception
- DTX: Discontinuous Transmission
- DTCH: Dedicated Traffic Channel
- DUT: Device Under Test
- E-CID: Enhanced Cell-ID (positioning method)
- E-SMLC: Evolved-Serving Mobile Location Centre
- ECGI: Evolved CGI
- ePDCCH: enhanced Physical Downlink Control Channel
- E-SMLC: evolved Serving Mobile Location Center
- E-UTRA: Evolved UTRA
- E-UTRAN: Evolved UTRAN
- FFS: For Further Study
- GERAN: GSM EDGE Radio Access Network
- GNSS: Global Navigation Satellite System
- GSM: Global System for Mobile communication
- HARQ: Hybrid Automatic Repeat Request
- HO: Handover
- HSPA: High Speed Packet Access
- HRPD: High Rate Packet Data
- LOS: Line of Sight
- LPP: LTE Positioning Protocol
- MBMS: Multimedia Broadcast Multicast Services
- MBSFN: Multimedia Broadcast multicast service Single Frequency Network
- MBSFN ABS: MBSFN Almost Blank Subframe
- MDT: Minimization of Drive Tests
- MIB: Master Information Block
- MME: Mobility Management Entity
- MSC: Mobile Switching Center
- NPDCCH: Narrowband Physical Downlink Control Channel
- OCNG: OFDMA Channel Noise Generator
- OFDM: Orthogonal Frequency Division Multiplexing
- OFDMA: Orthogonal Frequency Division Multiple Access
- OSS: Operations Support System
- OTDOA: Observed Time Difference of Arrival
- O&M: Operation and Maintenance
- PBCH: Physical Broadcast Channel
- P-CCPCH: Primary Common Control Physical Channel
- PCell: Primary Cell
- PCFICH: Physical Control Format Indicator Channel
- PDCCH: Physical Downlink Control Channel
- PDP: Profile Delay Profile
- PDSCH: Physical Downlink Shared Channel
- PGW: Packet Gateway
- PHICH: Physical Hybrid-ARQ Indicator Channel
- PLMN: Public Land Mobile Network
- PMI: Precoder Matrix Indicator
- PRACH: Physical Random Access Channel
- PRS: Positioning Reference Signal
- PSS: Primary Synchronization Signal
- PUCCH: Physical Uplink Control Channel
- RACH: Random Access Channel
- QAM: Quadrature Amplitude Modulation
- RAN: Radio Access Network
- RAT: Radio Access Technology
- RLM: Radio Link Management
- RNC: Radio Network Controller
- RNTI: Radio Network Temporary Identifier
- RRM: Radio Resource Management
- RS: Reference Signal
- RSCP: Received Signal Code Power
- RSRP: Reference Symbol Received Power OR Reference Signal Received Power
- RSRQ: Reference Signal Received Quality OR Reference Symbol Received Quality
- RSSI: Received Signal Strength Indicator
- RSTD: Reference Signal Time Difference
- SCH: Synchronization Channel
- SDU: Service Data Unit
- SFN: System Frame Number
- SGW: Serving Gateway
- SI: System Information
- SIB: System Information Block
- SNR: Signal to Noise Ratio
- SON: Self Optimized Network
- SS: Synchronization Signal
- SSS: Secondary Synchronization Signal
- TDOA: Time Difference of Arrival
- TOA: Time of Arrival
- TSS: Tertiary Synchronization Signal
- TTI: Transmission Time Interval
- UE: User Equipment
- UMTS: Universal Mobile Telecommunication System
- USIM: Universal Subscriber identity Module
- UTDOA: Uplink Time Difference of Arrival
- UTRA: Universal Terrestrial Radio Access
- UTRAN: Universal Terrestrial Radio Access Network
- WCDMA: Wide CDMA
- WLAN: Wide Local Area Network

## Claims

1. A method performed by a wireless device for providing a radio link status indication to a network, the method comprising:
- detecting an early radio link issue;
- starting a first timer when the early radio link issue is detected;
- starting a second timer when the early radio link issue is detected;
- initiating the transmission of an early radio link issue indication;
- wherein the transmission of the early radio link issue indication is initiated when the first timer reaches a first time interval threshold; and
- declaring radio link failure and triggering a cell reselection procedure when the second timer reaches a second time interval threshold, wherein the second time interval threshold is greater than the first time interval threshold.

2. The method of claim 1, wherein the first timer is started when X consecutive indicators that the wireless device has not correctly synchronized with the network are detected, where X is a positive integer.

3. The method of claim 2, wherein the value of X is set by the network.

4. The method of any of claims 2 and 3, wherein the value of X is 1, or wherein the value of X is 10.

5. The method of any of claims 1 to 4, further comprising stopping the first timer if Y consecutive indicators that the device has correctly synchronized with the network are detected before the time reaches the first time interval threshold, where Y is a positive integer.

6. The method of claim 5, wherein the value of Y is set by the network.

7. The method of any of claims 5 and 6, wherein the value of Y is 1, or wherein the value of Y is 10.

8. The method of any of claims 5 to 7, further comprising resetting the first timer when Y consecutive indicators that the device has correctly synchronized with the network are detected before the time reaches the first time interval threshold.

9. The method of any of claims 1 to 8, wherein the first time interval threshold is set to Z, wherein Z is a duration in milliseconds.

10. The method of claim 9, wherein Z is set by the network.

11. The method of any of claims 9 and 10, wherein Z is set to 500 milliseconds.

12. The method of claim 1, wherein the initiation of the transmission of the early radio link issue indication is performed immediately when the early radio link issue is detected.

13. The method of any preceding claim, wherein the wireless device uses a Primary Cell, PCell, to transmit the early radio link issue indication, and/or wherein the wireless device uses a supplementary uplink to transmit the early radio link issue indication

14. The method of any preceding claim, wherein the wireless device is configured to utilize carrier aggregation, and
wherein, when the early radio link issue is detected on a Primary Cell, PCell, connection, the wireless device sends the early radio link issue indication using a Secondary Cell, SCell, connection.

15. The method of any preceding claim, wherein the early radio link issue indication includes measurement information collected by the wireless device.

16. The method of claim 15, wherein the measurement information comprises measurements on New Radio, NR, frequencies the wireless device is configured to measure.

17. A wireless device for providing a radio link status indication, the wireless device comprising:
- processing circuitry configured to: detect an early radio link issue;
- power supply circuitry configured to supply power to the wireless device; the wireless device further comprising processing circuitry and power supply circuitry configured to;
- start a first timer when the early radio link issue is detected;
- start a second timer when the early radio link issue is detected;
- and initiate the transmission of an early radio link issue indication;
- wherein the transmission of the early radio link issue indication is initiated when the first timer reaches a first time interval threshold;
- declare radio link failure and triggering a cell reselection procedure when the second timer reaches a second time interval threshold, wherein the second time interval threshold is greater than the first time interval threshold.

## Patentansprüche

1. Verfahren, das von einer drahtlosen Vorrichtung zum Bereitstellen einer Anzeige eines Funkverbindungsstatus an ein Netzwerk durchgeführt wird, wobei das Verfahren Folgendes umfasst:
- Erfassen einer Ausgabe einer früheren Funkverbindung;
- Starten eines ersten Zeitgebers, wenn die Ausgabe der früheren Funkverbindung erfasst wird;
- Starten eines zweiten Zeitgebers, wenn die Ausgabe der früheren Funkverbindung erfasst wird;
- Initiieren der Übertragung einer Anzeige einer Ausgabe einer früheren Funkverbindung;
- wobei die Übertragung der Ausgabe der Anzeige der früheren Funkverbindung initiiert wird, wenn der erste Zeitgeber eine erste Zeitintervallschwelle erreicht; und
- Deklarieren eines Funkverbindungsfehlers und Auslösen einer Zellneuauswahlprozedur, wenn der zweite Zeitgeber eine zweite Zeitintervallschwelle erreicht, wobei die zweite Zeitintervallschwelle größer als die erste Zeitintervallschwelle ist.

2. Verfahren nach Anspruch 1, wobei der erste Zeitgeber gestartet wird, wenn X aufeinanderfolgende Indikatoren erfasst werden, die die drahtlose Vorrichtung nicht korrekt mit dem Netzwerk synchronisiert hat, wobei X eine positive Ganzzahl ist.

3. Verfahren nach Anspruch 2, wobei der Wert X von dem Netzwerk eingestellt wird.

4. Verfahren nach einem der Ansprüche 2 und 3, wobei der Wert von X 1 ist, oder wobei der Wert von X 10 ist.

5. Verfahren nach einem der Ansprüche 1 bis 4, weiter umfassend Stoppen des ersten Zeitgebers, falls Y aufeinanderfolgende Indikatoren erfasst werden, die die Vorrichtung korrekt mit dem Netzwerk synchronisiert hat, bevor die Zeit die erste Zeitintervallschwelle erreicht, wobei Y eine positive Ganzzahl ist.

6. Verfahren nach Anspruch 5, wobei der Wert von Y von dem Netzwerk eingestellt wird.

7. Verfahren nach einem der Ansprüche 5 und 6, wobei der Wert von Y 1 ist, oder wobei der Wert von Y 10 ist.

8. Verfahren nach einem der Ansprüche 5 bis 7, weiter umfassend Zurücksetzen des ersten Zeitgebers, wenn Y aufeinanderfolgende Indikatoren erfasst werden, die die Vorrichtung korrekt mit dem Netzwerk synchronisiert hat, bevor die Zeit die erste Zeitintervallschwelle erreicht.

9. Verfahren nach einem der Ansprüche 1 bis 8, wobei die erste Zeitintervallschwelle auf Z eingestellt wird, wobei Z eine Dauer in Millisekunden ist.

10. Verfahren nach Anspruch 9, wobei Z von dem Netzwerk eingestellt wird.

11. Verfahren nach einem der Ansprüche 9 und 10, wobei Z auf 500 Millisekunden eingestellt wird.

12. Verfahren nach Anspruch 1, wobei die Initiierung der Übertragung der Anzeige der Ausgabe der früheren Funkverbindung unmittelbar durchgeführt wird, wenn die Anzeige der früheren Funkverbindung erfasst wird.

13. Verfahren nach einem vorstehenden Anspruch, wobei die drahtlose Vorrichtung eine Primärzelle, PCell, verwendet, um die Anzeige der Ausgabe der früheren Funkverbindung zu übertragen, und/oder wobei die drahtlose Vorrichtung einen Hilfs-Uplink verwendet, um die Anzeige der Ausgabe der früheren Funkverbindung zu übertragen.

14. Verfahren nach einem vorstehenden Anspruch, wobei die drahtlose Vorrichtung dazu konfiguriert ist, Trägeraggregation zu nutzen, und
wobei, wenn die Ausgabe der früheren Funkverbindung auf einer Primärzellen-, PCell, Verbindung erfasst wird, die drahtlose Vorrichtung die Anzeige der Ausgabe der früheren Funkverbindung unter Verwendung einer Sekundärzellen-, SCell, Verbindung sendet.

15. Verfahren nach einem vorstehenden Anspruch, wobei die Anzeige der Ausgabe der früheren Funkverbindung Messungsinformationen beinhaltet, die von der drahtlosen Vorrichtung gesammelt wurden.

16. Verfahren nach Anspruch 15, wobei die Messungsinformationen Messungen auf New-Radio-, NR, Frequenzen umfassen, für die die drahtlose Vorrichtung konfiguriert ist, sie zu messen.

17. Drahtlose Vorrichtung zum Bereitstellen einer Anzeige eines Funkverbindungsstatus, wobei die drahtlose Vorrichtung Folgendes umfasst:
- Verarbeitungsschaltung, konfiguriert zum: Erfassen einer Ausgabe einer früheren Funkverbindung;
- Stromversorgungsschaltung, die dazu konfiguriert ist, die drahtlose Vorrichtung mit Strom zu versorgen; wobei die drahtlose Vorrichtung weiter Verarbeitungsschaltung und Stromversorgungsschaltung umfasst, die konfiguriert sind zum:
- Starten eines ersten Zeitgebers, wenn die Ausgabe der früheren Funkverbindung erfasst wird;
- Starten eines zweiten Zeitgebers, wenn die Ausgabe der früheren Funkverbindung erfasst wird;
- und Initiieren der Übertragung einer Anzeige einer Ausgabe einer früheren Funkverbindung;
- wobei die Übertragung der Ausgabe der Anzeige der früheren Funkverbindung initiiert wird, wenn der erste Zeitgeber eine erste Zeitintervallschwelle erreicht;
- Deklarieren eines Funkverbindungsfehlers und Auslösen einer Zellneuauswahlprozedur, wenn der zweite Zeitgeber eine zweite Zeitintervallschwelle erreicht, wobei die zweite Zeitintervallschwelle größer als die erste Zeitintervallschwelle ist.

## Revendications

1. Procédé exécuté par un dispositif sans fil pour fournir une indication d'état de liaison radio à un réseau, le procédé comprenant de :
- détecter un problème de liaison radio précoce ;
- démarrer un premier temporisateur lorsque le problème de liaison radio précoce est détecté ;
- démarrer un deuxième temporisateur lorsque le problème de liaison radio précoce est détecté ;
- lancer l'émission d'une indication précoce de problème de liaison radio ;
- dans lequel l'émission de l'indication d'émission précoce de liaison radio est lancée lorsque le premier temporisateur atteint un premier seuil d'intervalle de temps ; et
- déclarer une défaillance de liaison radio et déclencher une procédure de resélection de cellule lorsque le deuxième temporisateur atteint un deuxième seuil d'intervalle de temps, dans lequel le deuxième seuil d'intervalle de temps est supérieur au premier seuil d'intervalle de temps.

2. Procédé selon la revendication 1, dans lequel le premier temporisateur est démarré lorsque X indicateurs consécutifs indiquant que le dispositif sans fil n'a pas correctement synchronisé avec le réseau sont détectés, où X est un nombre entier positif.

3. Procédé selon la revendication 2, dans lequel la valeur de X est fixée par le réseau.

4. Procédé selon une quelconque des revendications 2 et 3, dans lequel la valeur de X est 1, ou dans lequel la valeur de X est 10.

5. Procédé selon une quelconque des revendications 1 à 4, comprenant en outre l'arrêt du premier temporisateur si Y indicateurs consécutifs indiquant que le dispositif a correctement synchronisé avec le réseau sont détectés avant que le temps n'atteigne le premier seuil d'intervalle de temps, où Y est un nombre entier positif.

6. Procédé selon la revendication 5, dans lequel la valeur de Y est fixée par le réseau.

7. Procédé selon une quelconque des revendications 5 et 6, dans lequel la valeur de Y est 1 ou dans lequel la valeur de Y est 10.

8. Procédé selon une quelconque des revendications 5 à 7, comprenant en outre la réinitialisation du premier temporisateur lorsque Y indicateurs consécutifs indiquant que le dispositif a correctement synchronisé avec le réseau sont détectés avant que le temps n'atteigne le premier seuil d'intervalle de temps.

9. Procédé selon une quelconque des revendications 1 à 8, dans lequel le premier seuil d'intervalle de temps est fixé à Z, dans lequel Z est une durée en millisecondes.

10. Procédé selon la revendication 9, dans lequel Z est fixé par le réseau.

11. Procédé selon une quelconque des revendications 9 et 10, dans lequel Z est réglé à 500 millisecondes.

12. Procédé selon la revendication 1, dans lequel le lancement de l'émission de l'indication d'émission précoce de liaison radio est effectué immédiatement lorsque l'émission précoce de liaison radio est détectée.

13. Procédé selon une quelconque des revendications précédentes, dans lequel le dispositif sans fil utilise une cellule primaire, PCell, pour transmettre l'indication d'émission précoce de liaison radio, et/ou dans lequel le dispositif sans fil utilise une liaison montante supplémentaire pour transmettre l'indication d'émission précoce de liaison radio.

14. Procédé selon une quelconque des revendications précédentes, dans lequel le dispositif sans fil est configuré pour utiliser l'agrégation de porteuses, et dans lequel, lorsque le premier problème de liaison radio est détecté sur une connexion de cellule primaire, PCell, le dispositif sans fil envoie l'indication de problème de liaison radio précoce à l'aide d'une connexion de cellule secondaire, SCell.

15. Procédé selon une quelconque des revendications précédentes, dans lequel l'indication d'émission précoce de liaison radio comprend des informations de mesure collectées par le dispositif sans fil.

16. Procédé selon la revendication 15, dans lequel les informations de mesure comprennent des mesures sur les fréquences New Radio, NR, que le dispositif sans fil est configuré pour mesurer.

17. Dispositif sans fil pour fournir une indication d'état de liaison radio, le dispositif sans fil comprenant :
- des circuits de traitement configurés pour : détecter un problème de liaison radio précoce ;
- des circuits d'alimentation électrique configurés pour fournir de l'énergie au dispositif sans fil ; le dispositif sans fil comprenant en outre des circuits de traitement et des circuits d'alimentation configurés pour :
- démarrer une premier temporisateur lorsque le problème de liaison radio précoce est détecté ;
- démarrer un deuxième temporisateur lorsque le premier problème de liaison radio est détecté ; et
- lancer l'émission d'une indication précoce de problème de liaison radio ;
- dans lequel l'émission de l'indication d'émission précoce de liaison radio est lancée lorsque le premier temporisateur atteint un premier seuil d'intervalle de temps ;
- déclarer une défaillance de liaison radio et déclencher une procédure de resélection de cellule lorsque le deuxième temporisateur atteint un deuxième seuil d'intervalle de temps, dans lequel le deuxième seuil d'intervalle de temps est supérieur au premier seuil d'intervalle de temps.
